# EUROPEAN PATENT APPLICATION

(11) **EP 4 554 045 A1**
(43) Date of publication of application: **14.05.2025**
(21) Application number: 23853008.3
(22) Date of filing: 10.08.2023
(51) Int. Cl.: H02J 50/10, H02J 50/80, H02J 50/00, H01F 5/02

(54) **ELECTRONIC DEVICE AND METHOD FOR SUPPORTING WIRELESS CHARGING USING PARALLEL SWITCHING STRUCTURE**

(30) Priority: 11.08.2022 KR 20220100893; 23.09.2022 KR 20220121070
(71) Applicant: Samsung Electronics Co., Ltd., Suwon-si, Gyeonggi-do 16677 (KR)
(72) Inventor: PARK, Kyungmin, Suwon-si, Gyeonggi-do 16677 (KR); SONG, Mingi, Suwon-si, Gyeonggi-do 16677 (KR); SHIN, Seungshik, Suwon-si, Gyeonggi-do 16677 (KR); O, Changhak, Suwon-si, Gyeonggi-do 16677 (KR); LEE, Juhyang, Suwon-si, Gyeonggi-do 16677 (KR)
(74) Representative: Walaski, Jan Filip
(86) International application number: PCT/KR2023/011800
(87) International publication number: WO 2024/035139

(57) **Abstract**

An embodiment disclosed herein relates to an electronic device and a method for supporting wireless charging using a parallel switching structure. The electronic device may comprise: a battery; a wireless charging coil that includes a first coil and a second coil connected in parallel with the first coil; a wireless charging IC electrically connected to the wireless charging coil; a first switch for switching the parallel connection between the second coil and the first coil; and a processor. The processor may be configured to: identify the type of an external device by communicating with the external device in a designated mode; transmit a first command, requesting the transmission of designated first power corresponding to fast charging, to the external device and close the first switch when the external device supports fast charging; and transmit a second command, requesting the transmission of designated second power corresponding to general charging, to the external device and open the first switch when the external device does not support fast charging.

## Description

### [Technical Field]

An embodiment of the disclosure relates to an electronic device and a method for supporting wireless charging using parallel switching structure.

### [Background Art]

Recently, a wireless charging or a non-contract charging technology has been developed and applied to various electronic devices.

The wireless charging technology is a technology enabling charging of a battery of an electronic device, without connection to a wired charger, and is a technology enabling charging of a battery only when a user places a smartphone or a wearable device on a charging pad or a charging cradle.

An electronic device supporting the wireless charging technology may receive an input of power from an external device through a coil, and charge a battery by using the input power. In addition, the electronic device supporting the wireless charging technology may provide a wireless power sharing function of supplying wireless power to another electronic device by using power input from a connected wired charger or power of the battery. For example, when the wireless power sharing function is activated, the electronic device may generate designated power by using power of the battery, and supply the generated power to another electronic device (e.g., a smartphone, a smart watch, or a wireless earphone (e.g., a true wireless stereo earphone)) through the coil.

### [Disclosure of Invention]

### [Technical Problem]

As the electronic device supporting the wireless charging technology supports not only a function of receiving wireless power but also a function of supplying wireless power, various versatilities in designing a coil for wireless charging may be required. For example, a coil may be used as not only a reception coil but also a transmission coil, and thus research and development on a technology enabling increasing the wireless charging efficiency adaptively to the type (e.g., a smartphone, a smart watch, or a wireless earphone) of an external device are in continuous progress.

An embodiment of the disclosure may provide a method and an electronic device including a parallel switching structure so as to adaptively adjusting inductance of a coil according to the type (e.g., a smartphone, a smart watch, or a wireless earphone) of an external device.

### [Solution to Problem]

An electronic device according to an embodiment may include a battery, a wireless charging coil including a first coil and a second coil connected in parallel to the first coil, a wireless charging IC electrically connected to the wireless charging coil, a first switch configured to switch the parallel connection between the second coil and the first coil, and a processor.

The processor according to an embodiment may be configured to activate, based on the electronic device being placed to be aligned with at least a part of an external device, a wireless charging function of charging the battery by using wireless power input through the wireless charging coil from the external device, identify, based on performing designated communication with the external device, a type of the external device, in case that the external device is a device supporting fast charging, transmit, to the external device, a first command for requesting transmission of designated first power corresponding to fast charging, close the first switch, in case that the external device is a device not supporting fast charging, transmit, to the external device, a second command for requesting transmission of designated second power corresponding to normal charging, and open the first switch.

A method of an electronic device according to an embodiment, the electronic device including a wireless charging coil including a first coil and a second coil connected in parallel to the first coil, a wireless charging IC electrically connected to the wireless charging coil, and a first switch configured to switch the parallel connection between the second coil and the first coil, may include activating, based on the electronic device being placed to be aligned with at least a part of an external device, a wireless charging function of charging a battery by using wireless power input through the wireless charging coil from the external device, identifying, based on performing designated communication with the external device, a type of the external device, in case that the external device is a device supporting fast charging, transmitting, to the external device, a first command for requesting transmission of designated first power corresponding to fast charging, closing the first switch, in case that the external device is a device not supporting fast charging, transmitting, to the external device, a second command for requesting transmission of designated second power corresponding to normal charging, and opening the first switch.

An electronic device configured to transmit wireless power to an external device according to an embodiment may include a transmission coil including a first coil and a second coil connected in parallel to the first coil, a transmission integrated chip (TX IC) electrically connected to the transmission coil, a first switch configured to switch the parallel connection between the second coil and the first coil, and a controller, wherein the controller is configured to activate a wireless power sharing function of transmitting wireless power to an external device by using the transmission coil, in case that the wireless power sharing function is activated, identify a type of the external device by performing of designated communication with the external device, receive, from the external device, a first command for requesting transmission of designated first power corresponding to fast charging, in response to the reception of the first command, open the first switch, and transmit the first power to the external device by using the transmission coil.

### [Advantageous Effects of Invention]

An electronic device and a method according to an embodiment of the disclosure may include a parallel switching structure to adaptively adjust inductance of a coil according to the type (e.g., a smartphone, a smart watch, or a wireless earphone) of an external device, thereby increasing wireless charging efficiency and improving stability and heating performance.

### [Brief Description of Drawings]

FIG. 1 is a block diagram illustrating an electronic device in a network environment according to an embodiment.
FIG. 2 is a block diagram illustrating a power interface circuit and a battery of an electronic device according to an embodiment.
FIG. 3 is a concept diagram illustrating a wireless charging device of an electronic device according to an embodiment.
FIG. 4 is a schematic circuit diagram illustrating a wireless charging device of an electronic device according to an embodiment.
FIG. 5A illustrates a laminated structure of a wireless charging coil according to an embodiment.
FIG. 5B illustrates a laminated structure of a wireless charging coil according to an embodiment.
FIG. 6A illustrates a laminated structure of a wireless charging coil according to an embodiment.
FIG. 6B illustrates a laminated structure of a wireless charging coil according to an embodiment.
FIG. 7 is a flow chart illustrating a case where an electronic device performs fast charging in an RX mode according to an embodiment.
FIG. 8 is a flow chart illustrating a case where an electronic device performs normal charging in an RX mode according to an embodiment.
FIG. 9 is a schematic circuit diagram of a wireless charger (e.g., a wireless charging pad) according to an embodiment.
FIG. 10A illustrates a laminated structure of a transmission coil according to an embodiment.
FIG. 10B illustrates a laminated structure of a transmission coil according to an embodiment.
FIG. 11 is a circuit diagram illustrating a case where an electronic device performs normal charging in an RX mode according to an embodiment.
FIG. 12 is a circuit diagram illustrating a case where an electronic device performs fast charging in an RX mode according to a comparison example.
FIG. 13 is a circuit diagram illustrating a case where an electronic device performs fast charging in an RX mode according to an embodiment.
FIG. 14 is a circuit diagram illustrating a case where an electronic device performs fast charging in an RX mode according to an embodiment.
FIG. 15 is a flow chart illustrating a case where an electronic device performs fast charging in an RX mode according to an embodiment.
FIG. 16 is a flow chart illustrating a case where an electronic device performs normal charging in an RX mode according to an embodiment.
FIG. 17 is a flow chart illustrating a case where an electronic device performs fast charging in a TX mode according to an embodiment.
FIG. 18 is a flow chart illustrating a case where an electronic device performs normal charging in a TX mode according to an embodiment.
FIG. 19 is a concept diagram illustrating a wireless charging device of an electronic device according to an embodiment.

### [Mode for the Invention]

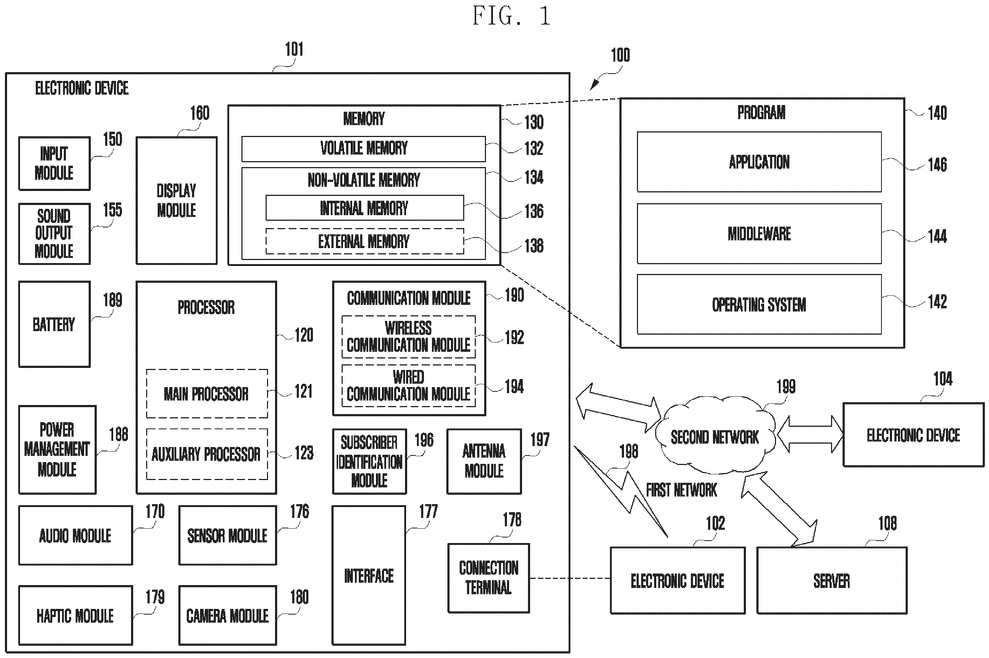

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that an embodiment of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," " a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in an embodiment of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

An embodiment of the disclosure may be implemented as software (e.g., the program 101) including one or more instructions that are stored in a storage medium (e.g., the internal memory 136 or external memory 138) that is readable by a machine (e.g., the electronic device 140). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment set forth herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may also be separately disposed in another element. According to an embodiment, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

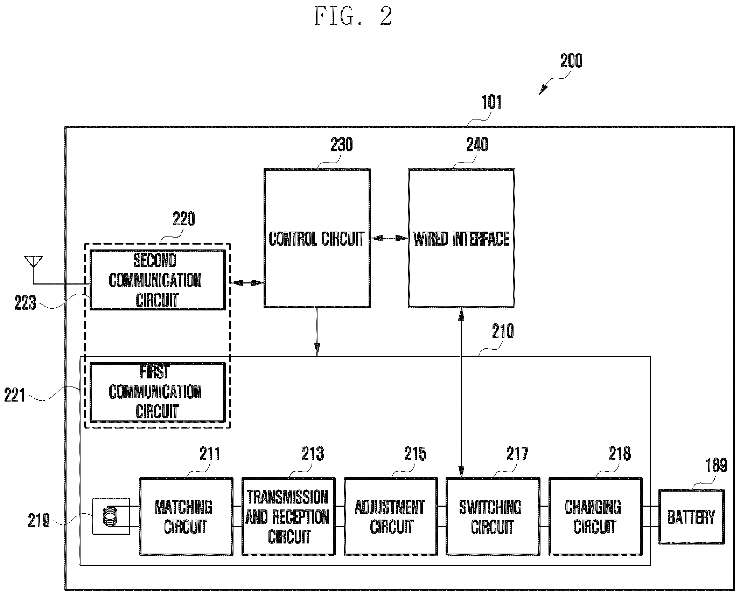

FIG. 2 is a block diagram 200 illustrating a power interface circuit 210 and a battery 189 of an electronic device 101 according to an embodiment.

Referring to FIG. 2, the electronic device 101 according to an embodiment may include at least one of a battery 189, a power interface circuit 210, a communication circuit 220, a control circuit 230, or a wired interface 240.

The battery 189 may include, for example, a protection circuit module. The battery protection circuit module may perform various functions (e.g., a pre-cutoff function) to prevent a performance deterioration of, or a damage to, the battery 189. The battery protection circuit module, additionally or alternatively, may be configured as at least part of a manage system for the battery 189 to perform cell balancing, measurement of battery capacity, counting the number of times of charging or discharging, measurement of temperature, or measurement of voltage. According to an embodiment, at least a part of usage state information or charging state information of the battery 189 may be measured using a fuel gauge, the power interface circuit 210, or a sensor module (e.g., a temperature sensor).

The power interface circuit 210 may include at least one of at least one circuit for supporting wired charging corresponding to charging the battery 189 by using power input from a travel adapter (TA) (or an external electronic device) through the wired interface 240, and at least one circuit for supporting wireless charging corresponding to charging the battery 189 by using wireless power input from the external electronic device through a wireless charging coil 219.

According to an embodiment, the wired charging may include a function of charging the battery 189 by using power input from an external power source, e.g., a travel adapter (TA), and/or a transmission function of transmitting transmission power based on a designated voltage to an external device through the wired interface 240 (e.g., a USB interface). According to an embodiment, the wireless charging may include a reception function of receiving power wirelessly from the external electronic device through the coil 219 and charging the battery 189 by using the input power (or rectified, converted, and/or regulated power), and/or a transmission function of generating a designated voltage by using the voltage of the battery 189 and wirelessly transmitting transmission power based on the designated voltage through the coil 219. According to an embodiment, the power interface circuit 210 may simultaneously perform the transmission functions of the wired charging and the wireless charging. For example, the power interface circuit 210 may simultaneously perform at least some operations of charging the battery 189 by using power input from the TA and at least some operations of wirelessly transmitting the transmission power generated using the voltage of the battery 189 through the coil 219. According to an embodiment, the wireless charging may use a wireless power transmission scheme of a magnetic field inductive coupling scheme, a resonance coupling scheme, or a combination thereof.

According to an embodiment, the power interface circuit 210 may include a matching circuit 211 for improving the efficiency of wireless charging, a rectification circuit 213 (or an inverter circuit) configured to convert current of a power signal from AC into DC during power reception through the coil 219 or convert current of a power signal from DC to AC during power transmission through the coil 219, an adjustment circuit 215 (e.g., low dropout (LDO)) for adjusting a charging voltage, a switching circuit 217, or a charging circuit 218 (e.g., switched capacitor or a voltage divider).

According to an embodiment, the switching circuit 217 may include at least one switch for controlling a power output to a device (e.g., an on-the-go device) connected through the wired interface 240 or a wired power reception device, and a power input from the wired charging device. According to an embodiment, the switching circuit 217 may further include at least one switch for controlling a reception function of receiving power wirelessly from an external electronic device through the coil 219 and/or a transmission function of wirelessly transmitting transmission power based on a voltage of the battery 189 or power input from a TA through the coil 219. According to an embodiment, the rectification circuit 213 may be implemented as a full bridge inverter or a half bridge inverter, but the disclosure is not limited thereto, and the rectification circuit can be changed various forms.

According to an embodiment, the charging circuit 218 may be electrically connected to the switching circuit 217, and may adjust the voltage and/or current of power input through wired charging or wireless charging. For example, the charging circuit 218 may charge the battery 189 by adjusting the voltage and/or current of power input through the switching circuit 217. According to an embodiment, the charging circuit 218 may include a buck-boost converter (not shown) and a switching charger (e.g., a DC/DC converter) including a charging controller (not shown). According to an embodiment, the charging circuit 218 may include a direct charger supporting switched capacitor (cap) divider-type direct charging (e.g., "DC" charging). The direct charger may include an N:1 voltage divider which reduces an input voltage to 1/N (N is a positive integer) and increases an input current by N times.

The communication circuit 220 is a circuit for communication between a transmitter and a receiver during wireless charging, and may include at least one of a first communication circuit 221 and a second communication circuit 223. For example, the first communication circuit 221 performs communication by carrying information itself on power transferred through the coil 219 (in-band scheme). The first communication circuit 221 may communicate with an external electronic device by using a frequency shift keying (FSK) modulation technique of carrying information on the frequency of power during wireless power transmission and an amplitude shift keying (ASK) modulation technique of carrying information on the amplitude of power during wireless power reception. The first communication circuit 221 is circuitally connected to the matching circuit 211 and the circuit 213 therebetween, and performs FSK or ASK communication. The second communication circuit 223 may communicate with an external electronic device by using the frequency in a band different from that of the frequency of wireless power through the coil 219 (an out-of-band scheme). For example, the second communication circuit 223 may communicate with an external electronic device by using one of various short-distance communication schemes such as Bluetooth, Bluetooth low energy (BLE), Wi-Fi, and/or near field communication (NFC). The data transmitted or received to or from the external electronic device through the communication circuit 220 may include information related to a charging state (e.g., a rectified voltage, information on current flowing through the coil 219 or the rectification circuit 213 (e.g., load current or Iout), various packets, and/or a message for configuration).

The control circuit 230 may perform overall control of the power interface circuit 210, and may generate various types of message required for wireless charging and transfer the same to the communication circuit 220. The control circuit 230 may manage power supplied to the electronic device 101 and power transmitted through wireless charging from the electronic device 101. According to an embodiment, the control circuit 230 may be implemented as at least a part of, for example, a power management integrated circuit (PMIC) or an application processor.

The control circuit 230 may determine charging state information related to charging of the battery 189 (e.g., battery life, overvoltage, low voltage, overcurrent, overcharging, over discharging, overheating, short-circuit, or swelling), and determine, based on at least a part of the determined charging state information, whether the battery 189 is in a normal state. When the charging state information is determined to be an abnormal state, the control circuit 230 may adjust charging of the battery 189 (e.g., reduce charging current or voltage or stop charging).

The wired interface 240 may connect a TA (or an external electronic device) and the electronic device 101 through a connector. The wired interface 240 may include a USB communication module connected to the control circuit 230 or a processor through a designated system interface, e.g., an inter-integrated circuit (I2C). For example, the TA may communicate with a USB communication module of the electronic device 101 through a USB C-type CC terminal. According to an embodiment, the USB communication module may include a USB power delivery (PD) communication module for USB power delivery (PD) communication. According to an embodiment, the TA may be TA supporting programmable power supply (PPS) specifications, or a normal TA not supporting PPS. For example, the TA supporting PPS may change or adjust, based on the control of the control circuit 230 of the electronic device 101, output TA voltage or an output TA current in various manners. In the case of the TA not supporting PPS, the output TA voltage or the output TA current may be fixed.

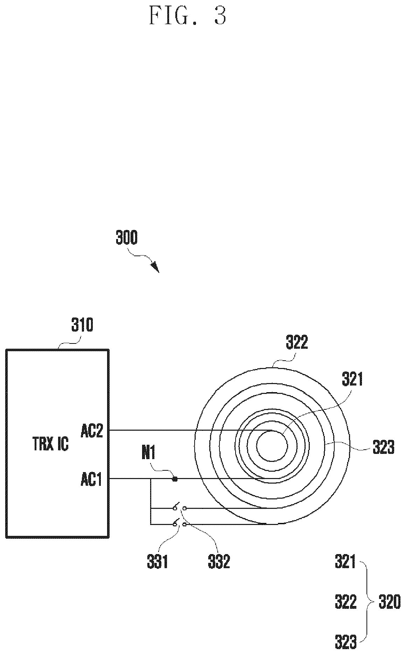

FIG. 3 is a concept diagram illustrating a wireless charging device 300 of an electronic device 101 according to an embodiment.

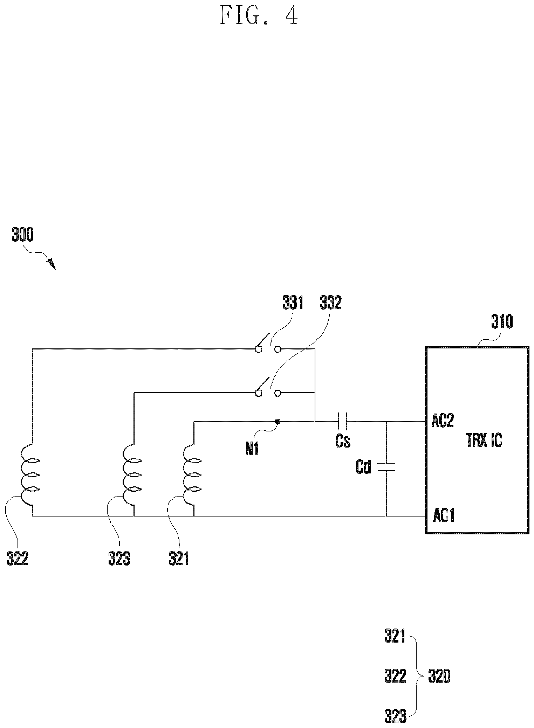

FIG. 4 is a schematic circuit diagram illustrating a wireless charging device 300 of an electronic device 101 according to an embodiment.

Referring to FIGS. 3 and 4, a wireless charging device 300 according to an embodiment may include a transmission/reception integrated circuit (TRX IC) 310 (e.g., a wireless charging IC), and a wireless charging coil 320 electrically connected to the TRX IC 310. According to an embodiment, the wireless charging coil 320 forms a wireless charging interface, and may include a first coil 321, a second coil 322 connected in parallel to the first coil 321, and a third coil 323 connected in parallel to the first coil 321 and the second coil 322.

According to an embodiment, the electronic device 101 may further include, in addition to the wireless charging coil 320 for wireless charging, a near field communication (NFC) antenna coil (not shown) for performing NFC communication and/or a magnetic secure transmission (MST) antenna coil (not shown) for performing MST antenna communication. The first coil 321, the second coil 322, and the third coil 323 corresponding to the wireless charging coil 320 described in the disclosure are elements independent from the NFC antenna coil (not shown) and the MST antenna coil (not shown) and may be separate elements.

One end of the wireless charging coil 320 may be connected to a first terminal AC1 of the TRX IC 310 and the other end of the wireless charging coil 320 may be connected to a second terminal AC2 of the TRX IC 310. For example, one end of the first coil 321 may be connected to the first terminal AC1 of the TRX IC 310, and the other end of the first coil 321 may be connected to the second terminal AC2 of the TRX IC 310.

The second coil 322 may be connected in parallel to the first coil 321, and the parallel connection between the first coil 321 and the second coil 322 may be switched by a first switch 331. The first switch 331 may be disposed between the one end of the first coil 321 and the second coil 322. The second coil 322 may be disposed on the outer side of the wireless charging coil 320. For example, the second coil 322 may be formed on the outer side of the first coil 321. The second coil 322 may be connected in parallel to the first coil 321 by the closing of the first switch 331, thereby adjusting the total resistance and inductance of the wireless charging coil 320.

The third coil 323 branched from the one end of the first coil 321 may be connected in parallel to the first coil 321 and the second coil 322, and the parallel connection between the third coil 323 and the first coil 321 or the parallel connection between the third coil 323 and the second coil 322 may be switched by a second switch 332. The second switch 332 may be disposed between the one end of the first coil 321 and the third coil 323. The third coil 323 may be disposed at a middle part of the wireless charging coil 320. For example, the third coil 323 may be disposed between the first coil 321 and the second coil 322. The third coil 323 may be connected in parallel to the first coil 321 by the closing of the second switch 332, thereby adjusting the total resistance and inductance of the wireless charging coil 320.

According to an embodiment, the wireless charging device 300 of the electronic device 101 may further include a third switch (not shown). For example, the third switch may be disposed on a node N1 between the first coil 312 and the TRX IC 310. According to an embodiment, the third switch disposed on the node N1 is configured, by default, to be closed during wireless charging, or may be configured to be opened based on the operation of the first coil 321.

In the disclosure, the state in which the electronic device 101 wirelessly receives power from an external device 700 through the wireless charging device 300 is referred to as "RX mode".

In the disclosure, the state in which the electronic device 101 wirelessly transmits power to the external device 700 through the wireless charging device 300 is referred to as "TX mode".

In the disclosure, a case where power transmitted or received when the electronic device 101 wirelessly transmits or receives power is high power is referred to as "fast charging". For example, the fast charging may mean a process in which wireless transmission or reception of power having a designated voltage or greater is performed. For example, the designated voltage may be about 15 W. The state in which the electronic device 101 performs fast charging may be referred to as a first charging mode of the electronic device 101.

In the disclosure, a case where power transmitted or received when the electronic device 101 wirelessly transmits or receives power is low power or normal power is referred to as "normal charging". For example, the normal charging may mean a process in which wireless transmission or reception of power having a voltage less than a designated voltage (e.g., about 15 W) is performed. The state in which the electronic device 101 performs normal charging may be referred to as a second charging mode of the electronic device 101.

According to an embodiment, a control operation of the first switch 331 and the second switch 332 when the wireless charging device 300 of the electronic device 101 is the RX mode may be as shown in Table 1 below.

**[Table 1]**

| | Charging mode | First switch 331 | Second switch 332 |
|---|---|---|---|
| RX mode | Normal charging (e.g., second charging mode) | Opened | Closed |
| | Fast charging (e.g., first charging mode) | Closed | Closed |

Referring to Table 1, when the wireless charging device 300 performs normal charging in the RX mode, the electronic device 101 may open the first switch 331 and close the second switch 332. In the normal charging, the wireless charging coil 320 may have designated first inductance and designated first resistance by the opening of the first switch 331 and the closing of the second switch 332. When the wireless charging coil 320 is configured to have the first inductance and the first resistance, a turn ratio between a transmission coil 920 of the external device 700 and the wireless charging coil 320 of the electronic device 101 may be a ratio of about 1:1, and a ratio between the voltage of the transmission coil 920 and the voltage of the wireless charging coil 320 may be a ratio of about 1:1. Referring to Table 1, when the wireless charging device 300 performs fast charging in the RX mode, the electronic device 101 may close the first switch 331 and close the second switch 332. The wireless charging coil 320 may have designated inductance and designated second resistance by the closing of the first switch 331 and the closing of the second switch 332. The second inductance may be less than the first inductance. The second resistance may be less than the first resistance. Accordingly, when performing fast charging in the RX mode, the electronic device 101 may reduce the inductance and the resistance of the wireless charging coil 320 by the control of the first switch 331 and the second switch 332. When the wireless charging coil 320 is configured to have second inductance and second resistance, a turn ratio between the transmission coil 920 of the external device 700 and the wireless charging coil 320 of the electronic device 101 may be a ratio of about 2:1, and a ratio between the voltage of the transmission coil 920 and the voltage of the wireless charging coil 320 may be a ratio of about 2:1. Accordingly, when fast charging is performed in the RX mode, the volage of the wireless charging coil 320 may be reduced by half. When the voltage of the wireless charging coil 320 is reduced by half during fast charging in the RX mode, overheating can be reduced, and the number of components arranged at the rear end of the wireless charging coil 320 can be reduced. For example, as described with reference to FIG. 2, the electronic device 101 may include a charging circuit 218 including an N:1 voltage divider which reduces an input voltage input through wireless charging to 1/N and increase input current by N times, but the wireless charging device 300 according to an embodiment may reduce the voltage of the wireless charging coil 320 by half during fast charging, thereby reducing the number of components of the charging circuit 218. When the voltage of the wireless charging coil 320 is reduced by half during fast charging in the RX mode, a reception voltage range can be extended even though the number of components is maintained. According to an embodiment, a control operation of the first switch 331 and the second switch 332 when the wireless charging device 300 of the electronic device 101 is in the TX mode may be as shown in Table 2 below.

**[Table 2]**

| | Charging mode | | First switch 331 | Second switch 332 |
|---|---|---|---|---|
| TX mode | Ping | | Opened | Closed |
| | Phone to Phone | Normal | Opened | Closed |
| | | Fast | Opened | Opened |

Referring to Table 2, when the wireless charging device 300 performs designated communication for starting wireless charging with the external device 700 in the TX mode, the electronic device 101 may open the first switch 331 and close the second switch 332. The designated communication for starting wireless charging with the external device 700 may include a ping stage according to a wireless power consortium (WPC) standard. When the electronic device 101 performs designated communication for starting wireless charging with the external device 700, a recognition rate for accurately recognizing the external device 700 is important, and the recognition rate may be high when a turn ration between the wireless charging coil 320 of the electronic device 101 and a coil of the external device 700 has a ratio of 1:1. Accordingly, when performing designated communication for starting wireless charging, the electronic device 101 may control the first witch 331 and the second switch 332 so that the turn ratio is to be a ratio of 1:1. Referring to Table 2, when the wireless charging device 300 wirelessly shares power to another smartphone by using a smartphone, such as phone-to-phone wireless charging, in the TX mode, the electronic device 101 may operate as follows. When performing normal charging in the TX mode, the electronic device 101 may open the first switch 331 and close the second switch 332. The wireless charging coil 320 may have designated first inductance and designated first resistance by the opening of the first switch 331 and the closing of the second switch 332. When the wireless charging coil 320 is configured to have the first inductance and the first resistance, a turn ratio between a reception coil of the external device 700 and the wireless charging coil 320 of the electronic device 101 may be a ratio of about 1:1, a ratio between the voltage of the reception coil and the voltage of the wireless charging coil 320 may be a ratio of about 1:1. According to an embodiment, performing normal charging in the TX mode by the electronic device 101 may be possible in not only a case of wirelessly sharing power with another smartphone by using a smartphone, such as phone-to-phone wireless charging, but also a case of wirelessly sharing power with a smart watch or a wireless earphone, such as a phone-to-phone watch or a phone-to-true wireless stereo earphone.

When performing fast charging in the TX mode, the electronic device 101 may open the first switch 331 and open the second switch 332. The wireless charging coil 320 may have designated third inductance and designated third resistance by the opening of the first switch 331 and the opening of the second switch 332. The third inductance may be greater than the first inductance. The third resistance may be greater than the first resistance.

When performing fast charging in the TX mode, the electronic device 101 may increase the inductance and the resistance of the wireless charging coil 320 by the control the first switch 331 and the second switch 332. When the wireless charging coil 320 is configured to have the third inductance and the third resistance, a turn ratio between the wireless charging coil 320 of the electronic device 101 and the reception coil of the external device 700 may be a ratio of about 2:1, and a ratio between the voltage of the wireless charging coil 320 and the voltage of the reception coil may be a ratio of about 2:1. Accordingly, when fast charging is performed in the TX mode, the voltage of the wireless charging coil 320 may be increased by two times.

In FIG. 4, the undescribed reference sign Cs may be a first capacitor connected in series with the wireless charging coil 320.

In FIG. 4, the undescribed reference sign Cd may be a second capacitor connected in parallel to the wireless charging coil 320.

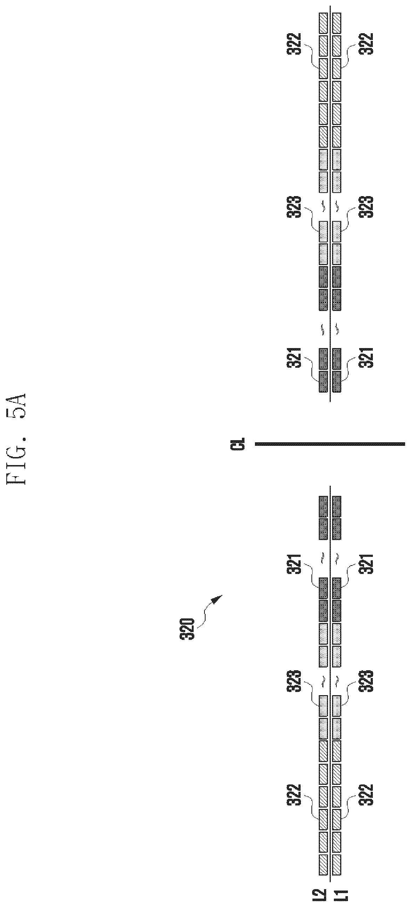

FIG. 5A illustrates a laminated structure of a wireless charging coil 320 according to an embodiment. For example, the wireless charging coil 320 illustrated in FIG. 5A may be a cross-sectional view schematically illustrating the wireless charging coil 320 illustrated in FIG. 3.

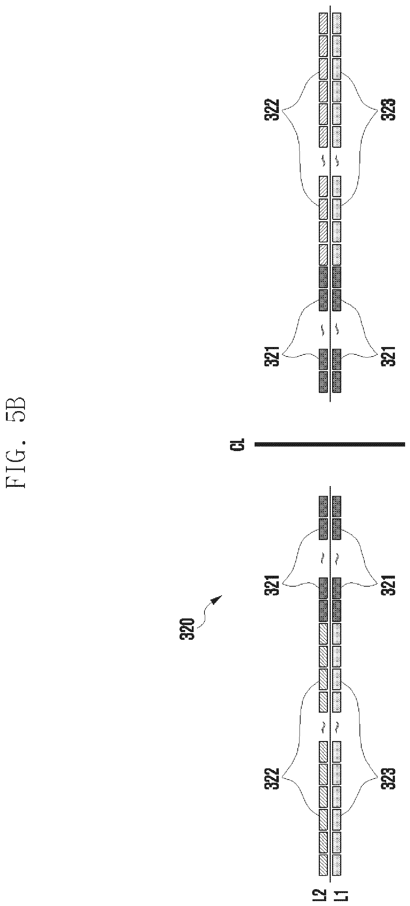

FIG. 5B illustrates a laminated structure of a wireless charging coil 320 according to an embodiment. For example, the wireless charging coil 320 illustrated in FIG. 5B may be a cross-sectional view schematically illustrating the wireless charging coil 320 illustrated in FIG. 3.

In FIGS. 5A and 5B, "CL" may indicate a virtual line passing through the center of the wireless charging coil 320, and in the wireless charging coil 320, the outer side from the virtual line CL may mean an outer part of the wireless charging coil 320.

Referring to FIGS. 5A and 5B, the wireless charging coil 320 according to an embodiment may include a 2-layer structure. For example, the wireless charging coil 320 may be formed on each of a first layer L1 and a second layer L2. The second layer L2 may be a layer positioned in a first direction (e.g., upper direction) from the first layer L1.

Referring to FIG. 5A, on the first layer L1 of the wireless charging coil 320 according to an embodiment, a first coil 321, a second coil 322, and a third coil 323 may be formed. The first coil 321 may be formed to have a designated number of turns so as to be close to the center of the wireless charging coil 320. The second coil 322 may be formed to have a designated number of turns so as to be close to the outer side of the wireless charging coil 320. The third coil 323 may be formed to have a designated number of turns between the first coil 321 and the second coil 322.

Referring to FIG. 5A, on the second layer L2 of the wireless charging coil 320 according to an embodiment, a first coil 321, a second coil 322, and a third coil 323 may be formed. On the second layer L2, the first coil 321 may be formed to overlap the first coil 321 formed on the first layer L1. On the second layer L2, the second coil 322 may be formed to overlap the second coil 322 formed on the first layer L1. On the second layer L2, the third coil 323 may be formed to overlap the third coil 323 formed on the first layer L1.

Referring to FIG. 5B, on the first layer L1 of the wireless charging coil 320 according to an embodiment, a first coil 321 and a third coil 323 may be formed. The first coil 321 may be formed to have a designated number of turns so as to be close to the center of the wireless charging coil 320. The third coil 323 may be formed to have a designated number of turns on the outer side of the first coil 321.

Referring to FIG. 5B, on the second layer L2 of the wireless charging coil 320 according to an embodiment, a first coil 321 and a second coil 322 may be formed. The first coil 321 may be formed to have a designated number of turns so as to be close to the center of the wireless charging coil 320. The second coil 322 may be formed to have a designated number of turns on the outer side of the first coil 321.

On the second layer L2, the first coil 321 may be formed to overlap the first coil 321 formed on the first layer L1. On the second layer L2, the second coil 322 may be formed to overlap the third coil 323 formed on the first layer L1.

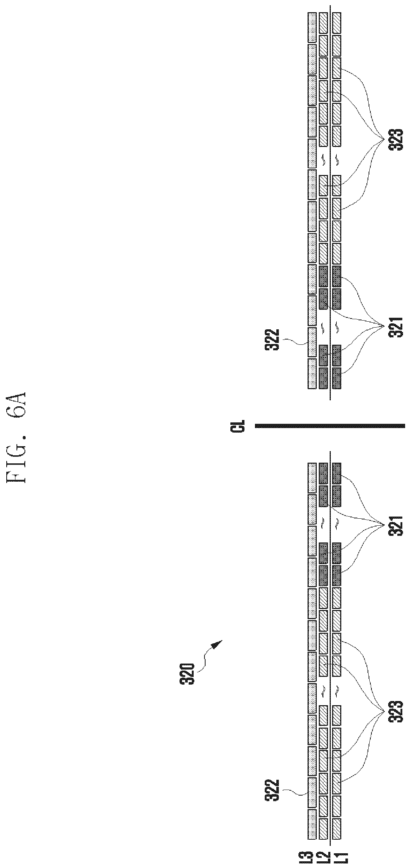

FIG. 6A illustrates a laminated structure of a wireless charging coil 320 according to an embodiment. For example, the wireless charging coil 320 illustrated in FIG. 6A may be a cross-sectional view schematically illustrating the wireless charging coil 320 illustrated in FIG. 3.

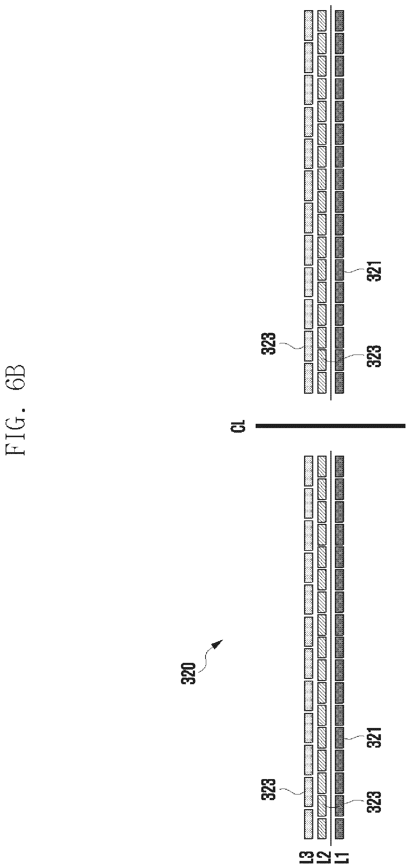

FIG. 6B illustrates a laminated structure of a wireless charging coil 320 according to an embodiment. For example, the wireless charging coil 320 illustrated in FIG. 6B may be a cross-sectional view schematically illustrating the wireless charging coil 320 illustrated in FIG. 3.

In FIGS. 6A and 6B, "CL" may indicate a virtual line passing through the center of the wireless charging coil 320, and in the wireless charging coil 320, a part closer to the outer side from the virtual line CL may mean an outer part of the wireless charging coil 320.

Referring to FIGS. 6A and 6B, the wireless charging coil 320 according to an embodiment may include a 3-layer structure. For example, the wireless charging coil 320 may be formed on each of a first layer L1, a second layer L2, and a third layer L3. The second layer L2 may be a layer positioned in a first direction (e.g., upper direction) from the first layer L1. The third layer L3 may be a layer positioned in a first direction (e.g., upper direction) from the second layer L2. For example, the second layer L2 may mean a layer laminated between the first layer L1 and the third layer L3.

Referring to FIG. 6A, on the first layer L1 of the wireless charging coil 320 according to an embodiment, a first coil 321 and a third coil 323 may be formed. The first coil 321 may be formed to have a designated number of turns so as to be close to the center of the wireless charging coil 320. The third coil 323 may be formed to have a designated number of turns on the outer side of the first coil 321.

Referring to FIG. 6A, on the second layer L2 of the wireless charging coil 320 according to an embodiment, a first coil 321 and a third coil 323 may be formed. On the second layer L2, the first coil 321 may be formed to overlap the first coil 321 formed on the first layer L1. On the second layer L2, the third coil 323 may be formed to overlap the third coil 323 formed on the first layer L1.

Referring to FIG. 6A, on the third layer L3 of the wireless charging coil 320 according to an embodiment, the second coil 322 may be formed to have a designated number of turns. On the third layer L3, one part of the second coil 322 may overlap the first coil 321 formed on each of the first layer L1 and the second layer L2. On the third layer L3, the other part of the second coil 322 may overlap the third coil 323 formed on each of the first layer L1 and the second layer L2.

Referring to FIG. 6B, on the first layer L1 of the wireless charging coil 320 according to an embodiment, a first coil 321 may be formed to have a designated number of turns. On the second layer L2 of the wireless charging coil 320 according to an embodiment, a third coil 323 may be formed to have a designated number of turns. On the third layer L3 of the wireless charging coil 320 according to an embodiment, a second coil 322 may be formed to have a designated number of turns. Referring to FIG. 6B, the wireless charging coil 320 according to an embodiment may be formed so that the first coil 321, the second coil 322, and the third coil 323 overlap one another.

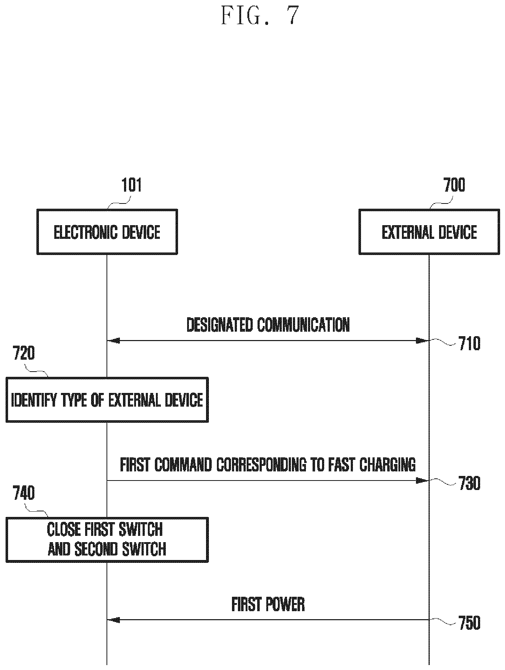

FIG. 7 is a flow chart illustrating a case where an electronic device 101 performs fast charging in an RX mode according to an embodiment.

At least some of the operations illustrated in FIG. 7 may be omitted. At least some operations mentioned with reference to other drawings of the disclosure may be additionally inserted before or after at least some operations illustrated in FIG. 7.

The operations illustrated in FIG. 7 may be performed by a processor (e.g., the processor of FIG. 1). For example, when being executed by the processor (e.g., the processor of FIG. 1), a memory (e.g., the memory 130 of FIG. 1) of the electronic device 101 may store instructions for causing the processor to perform at least some operations illustrated in FIG. 7.

In operation 710, the electronic device 101 according to an embodiment may perform designated communication with an external device 700 for wireless charging. According to an embodiment, the designated communication may include a communication protocol based on wireless power consortium (WPC) corresponding to an inductance-type standard and a communication protocol based on A4 WP or AFA standard corresponding to a resonance-type standard.

According to an embodiment, the electronic device 101 may perform designated communication with the external device 700 according to the WPC standard. For example, the electronic device 101 may perform, based on the WPC standard, a ping stage, an identification & configuration stage, or a power transfer stage.

The ping stage may be a stage of identifying whether a wireless power reception device (hereinafter, referred to as "device") is placed on a wireless power transmission device (hereinafter, referred to as "device"). A Tx device may generate an analog ping (A-ping) (e.g., a first ping) to detect whether a specific object (e.g., an Rx device or a metal material) is positioned on an interface surface (e.g., active area). When detecting, by the analog ping, the specific object (e.g., the Rx device or the metal material), the Tx device may generate a digital ping (D-ping) (e.g., a second ping). The digital ping is for activating a wireless charging circuit of the Rx device, and when receiving a signal strength packet (SSP) from the Rx device after the generation of the digital ping, the Tx device may determine that the specific object detected on the interface surface is the Rx device. When no SSP is received, the Tx device may determine that the Rx device is not placed on the interface surface, and periodically generate the analog ping again.

The identification & configuration stage may be a stage in which the Tx device and the Rx device identify each other and transmit or receive various packets for configuring wireless charging to or from each other. For example, the packets may include an SSP, an identification packet, a configuration packet, a foreign object detection (FOD) status packet, or the like.

The power transfer stage may be a stage in which the Tx device wirelessly transmits, based on a configuration value (e.g., a wireless power value) determined in the identification & configuration stage, power to the Rx device. While receiving wireless power and charging the battery, the Rx device may transfer state information of the Rx device to the Tx device. For example, the state information may include state such as FOD, overheating, fully-charged, or wired TA connection to the Rx device. For example, a packet transmitted by the Rx device may include a control error packet (CEP) or an FOD status packet. For example, the Tx device may receive the CEP from the Rx device and perform, based on the received CEP, suspension of wireless power transmission, adjustment of transmission power, or the like.

According to an embodiment, the electronic device 101 may perform the ping stage according to the WPC standard in operation 710. According to an embodiment, while performing the ping stage, the electronic device 101 may open a first switch 331 and close a second switch 332 so that a turn ratio between the wireless charging coil 320 of the electronic device 101 and the coil of the external device 700 is to be a ratio of 1:1. This may be for increasing a recognition rate so that the electronic device 101 accurately recognizes the external device 700, as described above.

In operation 720, the electronic device 101 according to an embodiment may identify the type of the external device 700. For example, the electronic device 101 may perform the identification & configuration stage and determine whether the external device 700 is a device capable of fast charging or the external device 700 is a device capable of normal charging. For example, in operation 720, the electronic device 101 may identify that the external device 700 is a device capable of fast charging.

In operation 730, the electronic device 101 according to an embodiment may transmit a first command corresponding to fast charging to the external device 700. For example, the first command may include data requesting transmission of first power corresponding to fast charging.

In operation 740, the electronic device 101 according to an embodiment may close, based on the transmission of the first command, the first switch 331 and the second switch 332. The wireless charging coil 320 may have designated second inductance and designated second resistance by the closing of the first switch 331 and the closing of the second switch 332. The second inductance may be smaller than first inductance. The second resistance may be smaller than first resistance.

In operation 750, the electronic device 101 according to an embodiment may receive first power corresponding to fast charging from the external device 700. The electronic device 101 may charge the battery by using the received first power, or supply designated power to a component (e.g., system) included in the electronic device 101. When receiving the first power according to fast charging in an RX mode, the electronic device 101 may reduce the inductance and resistance of the wireless charging coil 320 upon control of the first switch 331 and the second switch 332. When the wireless charging coil 320 is configured to have the second inductance and the second resistance, a turn ratio between a transmission coil 920 of the external device 700 and the wireless charging coil 320 of the electronic device 101 may be a ratio of about 2:1, and the volage of the transmission coil 920 and the voltage of the wireless charging coil 320 may have a ratio of about 2:1. Accordingly, when the electronic device 101 performs fast charging, the voltage of the wireless charging coil 320 may be reduced by half. When the voltage of the wireless charging coil 320 is reduced by half, the overheating can be reduced, and the number of components (e.g., N:1 voltage dividers) arranged at the rear end of the wireless charging coil 320 can be reduced.

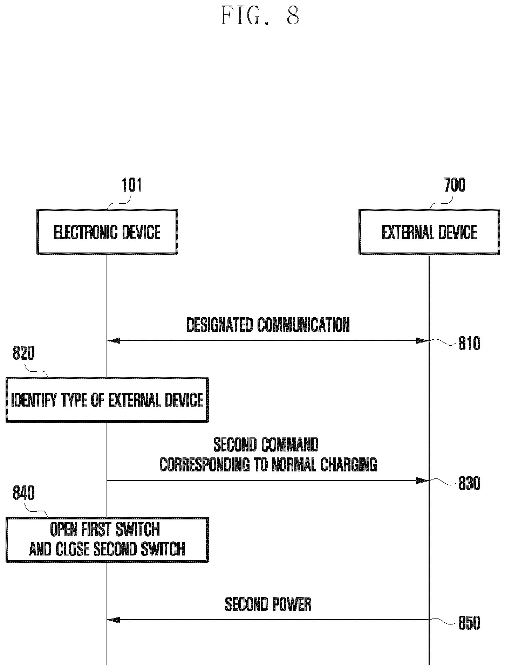

FIG. 8 is a flow chart illustrating a case where an electronic device 101 performs normal charging in an RX mode according to an embodiment.

At least some of the operations illustrated in FIG. 8 may be omitted. At least some operations mentioned with reference to other drawings of the disclosure may be additionally inserted before or after at least some operations illustrated in FIG. 8.

The operations illustrated in FIG. 8 may be performed by a processor (e.g., the processor of FIG. 1). For example, a memory (e.g., the memory 130 of FIG. 1) of the electronic device 101 may store instructions for causing the processor to perform at least some operations illustrated in FIG. 8.

In operation 810, the electronic device 101 according to an embodiment may perform designated communication with an external device 700 for wireless charging. According to an embodiment, the designated communication may include a communication protocol based on wireless power consortium (WPC) corresponding to an inductance-type standard and a communication protocol based on A4 WP or AFA standard corresponding to a resonance-type standard. Operation 810 may be identical or similar to operation 710.

In operation 820, the electronic device 101 according to an embodiment may identify the type of the external device 700. For example, the electronic device 101 may perform the identification & configuration stage and determine whether the external device 700 is a device capable of fast charging or the external device 700 is a device capable of normal charging. For example, in operation 820, the electronic device 101 may identify that the external device 700 is a device capable of normal charging (e.g., a device incapable of fast charging).

In operation 830, the electronic device 101 according to an embodiment may transmit a second command corresponding to fast charging to the external device 700. For example, the second command may include data requesting transmission of second power corresponding to normal charging. The second power may be lower than first power.

In operation 840, the electronic device 101 according to an embodiment may open the first switch 331 and close the second switch 332, based on the transmission of the second command. The wireless charging coil 320 may have designated first inductance and designated first resistance by the opening of the first switch 331 and the closing of the second switch 332. When the wireless charging coil 320 is configured to have the first inductance and the first resistance, a turn ratio between a transmission coil 920 of the external device 700 and the wireless charging coil 320 of the electronic device 101 may be a ratio of about 1:1, and the volage of the transmission coil 920 and the voltage of the wireless charging coil 320 may have a ratio of about 1: 1.

In operation 850, the electronic device 101 according to an embodiment may receive second power corresponding to normal charging from the external device 700. The electronic device 101 may charge the battery by using the received second power, or supply designated power to a component (e.g., system) included in the electronic device 101.

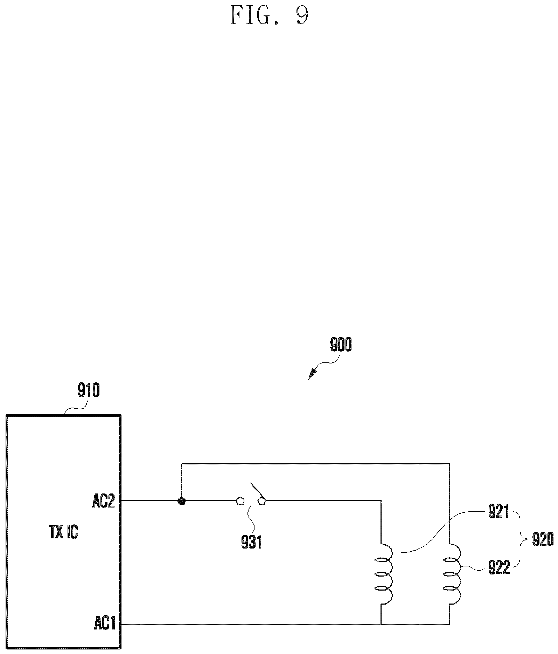

FIG. 9 is a schematic circuit diagram of a wireless charger 900 (e.g., a wireless charging pad) according to an embodiment. For example, the wireless charger 900 of FIG. 9 may be the external device 700 described with reference to FIGS. 3 to 8.

Referring to FIG. 9, the wireless charger 900 according to an embodiment may include a transmission integrated chip (TX IC) 910 and a transmission coil 920 electrically connected to the TX IC 910. According to an embodiment, the transmission coil 920 may include a fourth coil 921 and a fifth coil 922 connected in parallel to the fourth coil 921. One end of the transmission 920 may be connected to a first terminal AC1 of the TX IC 910, and the other end of the transmission coil 920 may be connected to a second terminal AC1 of the TX IC 910. For example, one end of the fourth coil 921 may be connected to the first terminal AC1 of the TX IC 910, and the other end of the fourth coil 921 may be connected to the second terminal AC1 of the TX IC 910.

The fifth coil 922 may be branched from the one end of the fourth coil 921 and connected in parallel to the fourth coil 921, and the parallel connection between the fourth coil 921 and the fifth coil 922 may be switched by a third switch 931. The third switch 91 may be disposed between the one end of the fourth coil 921 and the fifth coil 922. The fifth coil 922 may be disposed on the outer side of the transmission coil 920. For example, the fifth coil 922 may be formed on the outer side of the fourth coil 921. The fifth coil 922 may be connected parallel to the fourth coil 921 by the closing of the third switch 931, and may thus reduce the total resistance and inductance of the transmission coil 920.

In the disclosure, a case where power transmitted when the wireless charger 900 wirelessly transmits power to the electronic device 101 is high power is referred to as "fast charging". For example, the fast charging may mean a process in which wireless transmission of power having a designated voltage or greater is performed. For example, the designated voltage may be about 15 W.

In the disclosure, a case where power transmitted when the wireless charger 900 wirelessly transmits power to the electronic device 101 is low power or normal power is referred to as "normal charging". For example, the normal charging may mean a process in which wireless transmission of power having a voltage less than a designated voltage (e.g., about 15 W) is performed.

According to an embodiment, a control operation of the third switch 931 when the wireless charger 900 performs wireless charging may be as shown in Table 3 below. The third switch 931 may be controlled by the TX IC 910, or may be controlled by a controller (not shown) of the wireless charging 900.

**[Table 3]**

| Charging mode | Third switch 931 |
|---|---|
| Normal charging (e.g., second charging mode) | Closed |
| Fast charging (e.g., first charging mode) | Opened |

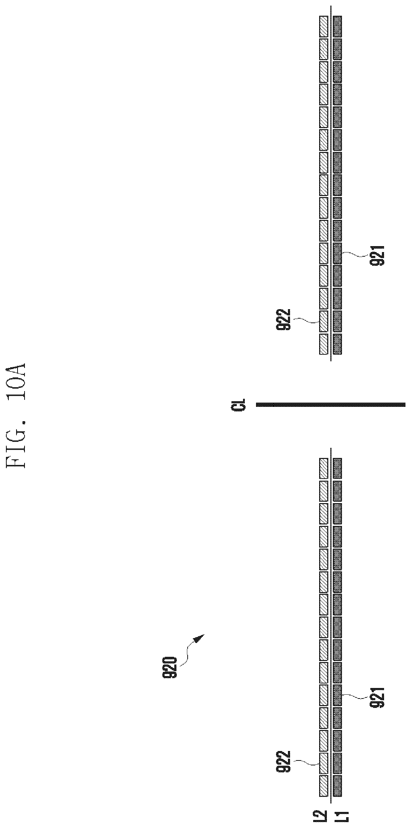

Referring to Table 3, when performing normal charging, the wireless charger 900 may close the third switch 931. The transmission coil 920 of the wireless charger 900 may have designated third inductance and designated third resistance by the closing of the third switch 931. Referring to Table 3, when performing fast charging, the wireless charger 900 may open the third switch 931. The transmission coil 920 of the wireless charger 900 may have designated fourth inductance and designated fourth resistance by the opening of the third switch 931. The fourth inductance may be greater than the third inductance. The fourth resistance may be greater than the third resistance. According to an embodiment, when the transmission coil 920 of the wireless charger 900 has the fourth inductance and the fourth resistance, a turn ratio between the transmission coil 920 and the wireless charging coil 320 of the electronic device 101 may be a ratio of about 2:1, and a ratio between a voltage of the transmission coil 920 and a voltage of the wireless charging coil 320 may be a ratio of about 2:1. Accordingly, when the electronic device 101 performs fast charging in the RX mode, the voltage of the wireless charging coil 320 may be reduced by half. When the voltage of the wireless charging coil 320 is reduced by half, the overheating of the electronic device 101 can be reduced and the number of components arranged at the rear end of the wireless charging coil 320. For example, as described with reference to FIG. 2, the electronic device 101 may include a charging circuit 218 including an N:1 voltage divider which reduces an input voltage of power input through wireless charging to 1/N, and increases input current by N times, and the wireless charging device 300 according to an embodiment may reduce the voltage of the wireless charging coil 320 by half during fast charging, thereby reducing the number of components of the charging circuit 218. FIG. 10A illustrates a laminated structure of a transmission coil 920 according to an embodiment. The transmission coil 920 illustrated in FIG. 10A may be a cross-sectional view schematically illustrating the transmission coil 920 illustrated in FIG. 9.

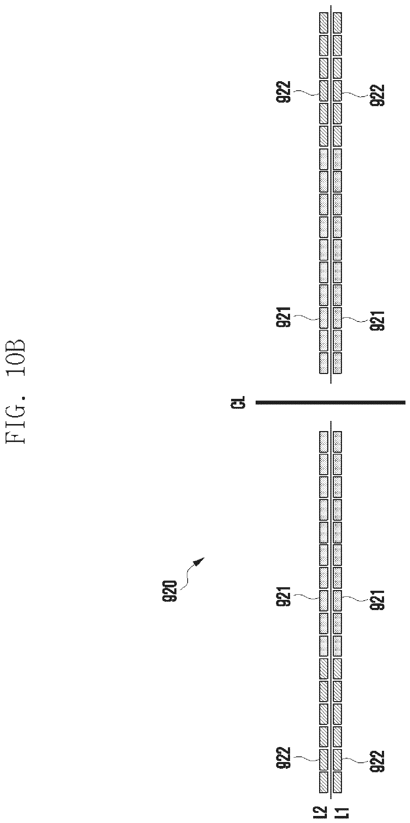

FIG. 10B illustrates a laminated structure of a transmission coil 920 according to an embodiment. For example, the transmission coil 920 illustrated in FIG. 10B may be a cross-sectional view schematically illustrating the transmission coil 920 illustrated in FIG. 9.

In FIGS. 10A and 10B, "CL" may indicate a virtual line passing through the center of the transmission coil 920, and in the transmission coil 920, a part closer to the outer side from the virtual line CL may mean an outer part of the transmission coil 920.

Referring to FIGS. 10A and 10B, the transmission coil 920 according to an embodiment may include a 2-layer structure. For example, the transmission coil 920 may be formed on each of a first layer L1 and a second layer L2.

Referring to FIG. 10A, on the first layer L1 of the transmission coil 920 according to an embodiment, a fourth coil 921 may be formed to have a designated number of turns. On the second layer L2 of the transmission coil 920 according to an embodiment, a firth coil 922 may be formed to have a designated number of turns. The transmission coil 920 according to an embodiment may be formed so that the fourth coil 921 and the fifth coil overlap each other.

Referring to FIG. 10B, on the first layer L1 of the transmission coil 920 according to an embodiment, the fourth coil 921 and the fifth coil 922 may be formed. The fourth coil 921 may be formed to have a designated number of turns to be close to the center of the transmission coil 920. The fifth coil 922 may be formed to have a designated number of turns on the outer side of the fourth coil 921.

Referring to FIG. 10B, on the second layer L2 of the transmission coil 920 according to an embodiment, the fourth coil 921 and the fifth coil 922 may be formed. On the second layer L2, the fourth coil 921 may be formed to overlap the fourth coil 921 formed on the first layer L1. On the second layer L2, the fifth coil 922 may be formed to overlap the fifth coil 922 formed on the first layer L1.

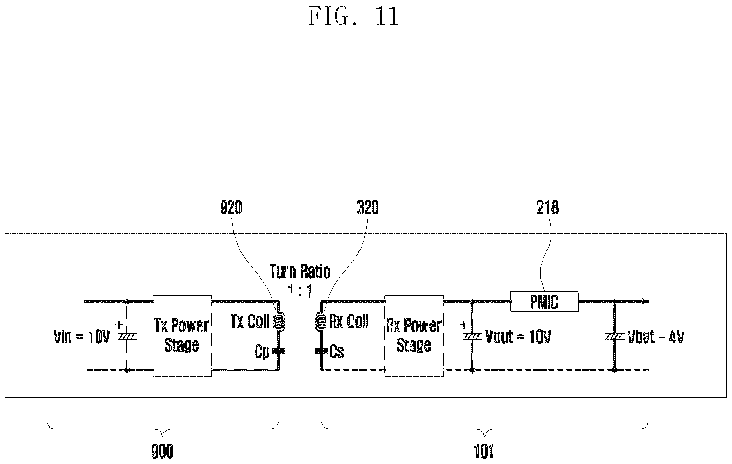

FIG. 11 is a circuit diagram illustrating a case where an electronic device 101 performs normal charging in an RX mode according to an embodiment.

In FIG. 11, a left area of a circuit including a transmission coil 920 may indicate a wireless charger 900, and a right area of the circuit including a wireless charging coil 320 may indicate the electronic device 101 operating in the RX mode. The wireless charger 900 may generate about 10 V of the voltage of the transmission coil 920 to transmit second power (e.g., about 15 W or less) corresponding to normal charging.

Referring to FIG. 11, when performing normal charging in the RX mode, a wireless charging device 300 according to an embodiment may open a first switch 331 and close a second switch 332. The wireless charging coil 320 in the normal charging may have designated first inductance and designated first resistance by the opening of the first switch 331 and the closing of the second switch 332. When the wireless charging coil 320 is configured to have the first inductance and the first resistance, a turn ratio between the transmission coil 920 of the external device 700 and the wireless charging coil 320 of the electronic device 101 may be a ratio of about 1:1, and a ratio between the voltage (e.g., about 10 V) of the transmission coil 920 and the voltage (e.g., about 10 V) of the wireless charging coil 320 may be a ratio of about 1:1.

According to an embodiment, a charging circuit 218 of the electronic deice 101 may convert the voltage (e.g., about 10 V) of the wireless charging coil 320 into a designated voltage (e.g., about 4 V) by using an N:1 voltage divider which reduces an input voltage and increase input current by N times, and supply the converted voltage to a battery or a component (e.g., system) of the electronic device 101.

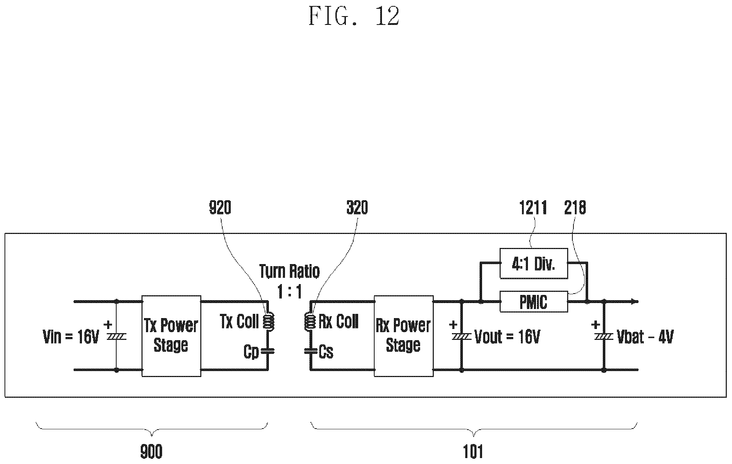

FIG. 12 is a circuit diagram illustrating a case where an electronic device 101 performs fast charging in an RX mode according to a comparison example.

In FIG. 12, a left area of a circuit including a transmission coil 920 may indicate a wireless charger 900, and a right area of a circuit including a wireless charging coil 320 may indicate the electronic device 101 operating in the RX mode. The wireless charger 900 may generate about 16 V of the voltage of the transmission coil 920 to transmit first power (e.g., about 30 W or about 15 W or greater) corresponding to fast charging.

Referring to FIG. 12, when performing fast charging in the RX mode, a wireless charging device 300 according to a comparison example may open the first switch 331 and close the second switch 332. In the fast charging, the wireless charging coil 320 may have designated first inductance and designate first resistance by the opening of the first switch 331 and the closing of the second switch 332. When the wireless charging coil 320 is configured to have the first inductance and the first resistance, a turn ratio between the transmission coil 920 of the external device 700 and the wireless charging coil 320 of the electronic device 101 may be a ratio of about 1:1, and a ratio between the voltage (e.g., about 16 V) of the transmission coil 920 and the voltage (e.g., about 16 V) of the wireless charging coil 320 may be a ratio of about 1:1.

According to an embodiment, a charging circuit 218 of the electronic device 101 may convert the voltage (e.g., about 10 V) of the wireless charging coil 320 into a designated voltage (e.g., about 4 V) by using an N:1 voltage divider which reduces an input voltage and increases input current by N times, and supply the converted voltage to a battery or a component (e.g., system) of the electronic device 101. For example, a charging circuit 218 may include a 4:1 voltage divider 1211 which reduces the voltage (e.g., about 16 V) of the wireless charging coil 320 by 1/4 and increases input current by four times.

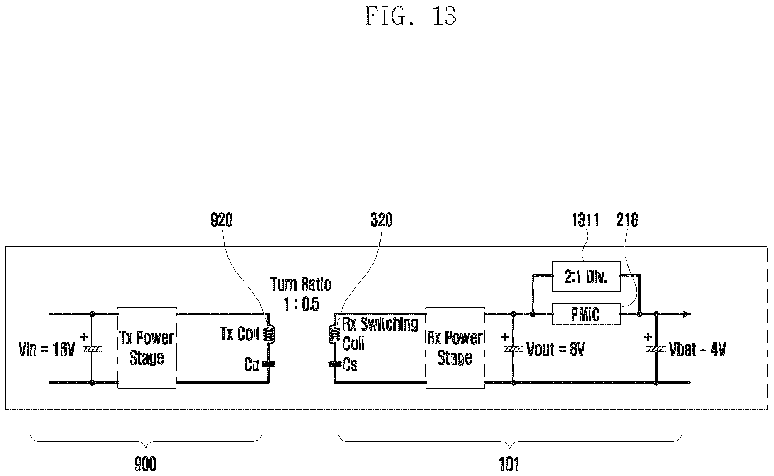

FIG. 13 is a circuit diagram illustrating a case where an electronic device 101 performs fast charging in an RX mode according to an embodiment.

In FIG. 13, a left area of a circuit including a transmission coil 920 may indicate a wireless charger 900, and a right area of a circuit including a wireless charging coil 320 may indicate the electronic device 101 operating in the RX mode. The wireless charger 900 may generate about 16 V of the voltage of the transmission coil 920 to transmit first power (e.g., about 30 W or about 15 W or greater) corresponding to fast charging.

Referring to FIG. 13, when performing fast charging in the RX mode, a wireless charging device 300 according to an embodiment may close the first switch 331 and the second switch 332. In the fast charging, the wireless charging coil 320 may have designated second inductance and designated second resistance by the closing of the first switch 331 and the second switch 332. When the wireless charging coil 320 is configured to have the second inductance and the second resistance, a turn ratio between the transmission coil 920 of the external device 700 and the wireless charging coil 320 of the electronic device 101 may be a ratio of about 1:0.5, and the voltage (e.g., about 16 V) of the transmission coil 920 and the voltage (e.g., about 8 V) of the wireless charging coil 320 may be a ratio of about 2:1.

According to an embodiment, a charging circuit 218 of the electronic device 101 may convert the voltage (e.g., about 8 V) of the wireless charging coil 320 into a designated voltage (e.g., about 4 V) by using an N:1 voltage divider which reduces an input voltage by 1/N and increase input current by N times, and supply the converted voltage to a battery or a component (e.g., system) of the electronic device 101. For example, a charging circuit 218 may include a 2:1 voltage divider 1311 which reduces the voltage (e.g., about 8 V) of the wireless charging coil 320 by 1/2 and increases input current by two times.

Compared to the electronic device 101 according to the comparison example shown in FIG. 12, the electronic device 101 according to an embodiment shown in FIG. 13 can reduce overheating by further reducing the voltage of the wireless charging coil 320, and reduce the number of components corresponding to the voltage divider 1311.

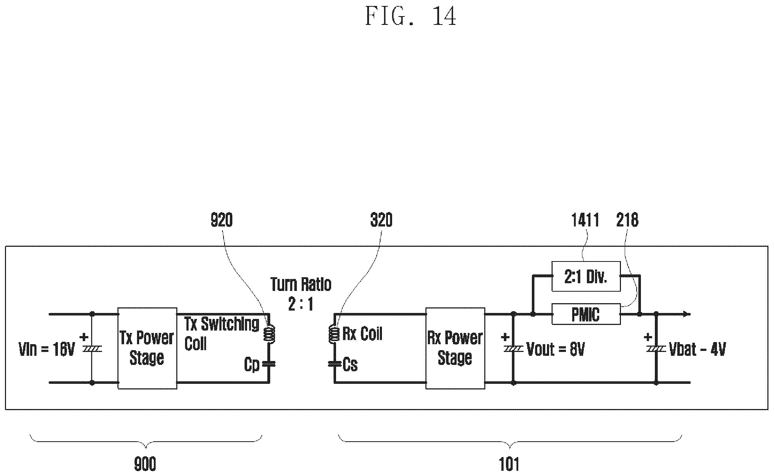

FIG. 14 is a circuit diagram illustrating a case where an electronic device 101 perform fast charging in an RX mode according to an embodiment.

In FIG. 14, a left area of a circuit including a transmission coil 920 may indicate a wireless charger 900, and a right area of a circuit including a wireless charging coil 320 may indicate the electronic device 101 operating in the RX mode. The wireless charger 900 may generate about 16 V of the voltage of the transmission coil 920 to transmit first power (e.g., about 30 W or about 15 W or greater) corresponding to fast charging.

Referring to FIG. 14, when performing fast charging, the wireless charger 900 according to an embodiment may open a third switch 931. The transmission coil 920 of the wireless charger 900 may have designated fourth inductance and designated fourth resistance by the opening of the third switch 931. Th fourth inductance may be greater than the third inductance. The fourth resistance may be greater than the third resistance. According to an embodiment, when the transmission coil 920 of the wireless charger 90 has the fourth inductance and the fourth resistance, a turn ratio between the transmission coil 920 and the wireless charging coil 320 of the electronic device 101 may have a ratio of about 2:1. Accordingly, a ratio between the voltage (e.g., about 16 V) of the transmission coil 920 and the voltage (e.g., about 8 V) of the wireless charging coil 320 may be a ratio of about 2:1.

According to an embodiment, a charging circuit 218 of the electronic device 101 may convert the voltage (e.g., about 8 V) of the wireless charging coil 320 into a designated voltage (e.g., about 4 V) by using an N:1 voltage divider which reduces an input voltage by 1/N and increases input current by N times, and supply the converted voltage to a battery or a component (e.g., system) of the electronic device 101. For example, the charging circuit 218 may include a 2:1 voltage divider 1411 which reduces the voltage (e.g., about 8 V) of the wireless charging coil 320 and increases input current by two times.

Compared to the electronic device 101 according to the comparison example shown in FIG. 12, as the wireless charger 900 controls the third switch 931, the electronic device 101 according to an embodiment shown in FIG. 13 can reduce overheating by further reducing the voltage of the wireless charging coil 320, and reduce the number of components corresponding to the voltage divider 1411.

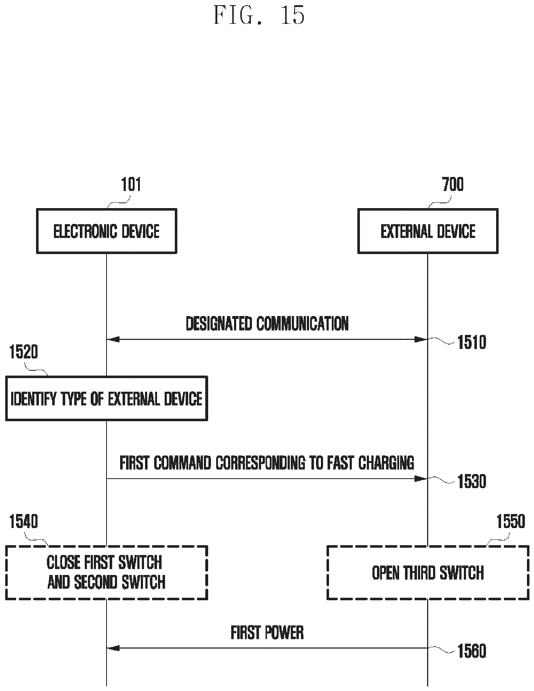

FIG. 15 is a flow chart illustrating a case where an electronic device 101 performs fast charging in an RX mode according to an embodiment.

At least some of the operations illustrated in FIG. 15 may be omitted. At least some operations mentioned with reference to other drawings of the disclosure may be additionally inserted before or after at least some operations illustrated in FIG. 15.

The operations illustrated in FIG. 15 may be performed by a processor (e.g., the processor of FIG. 1). For example, when being executed by the processor (e.g., the processor of FIG. 1), a memory (e.g., the memory 130 of FIG. 1) of the electronic device 101 may store instructions for causing the processor (e.g., the processor of FIG. 1) to perform at least some operations illustrated in FIG. 15.

In operation 1510, the electronic device 101 according to an embodiment may perform a ping stage according to the WPC standard. According to an embodiment, while performing the ping stage, the electronic device 101 may open a first switch 331 and close a second switch 332 so that a turn ratio between the wireless charging coil 320 of the electronic device 101 and the coil of the external device 700 is to be a ratio of 1:1. This may be for increasing a recognition rate so that the electronic device 101 accurately recognizes the external device 700, as described above.

Operation 1510 may be identical or similar to operation 710 of FIG. 7.

In operation 1520, the electronic device 101 according to an embodiment identify the type of the external device 700. For example, the electronic device 101 may perform an identification & configuration stage and determine whether the external device 700 is a device capable of fast charging or the external device 700 is a device capable of normal charging. For example, in operation 720, the electronic device 101 may identify that the external device 700 is a device capable of fast charging.

In operation 1520, the electronic device 101 according to an embodiment may identify whether the transmission coil 920 of the external device 700 supports a parallel switching function. For example, the parallel switching function may mean, as described with reference to FIG. 9, that the transmission coil 920 of the wireless charger 900 includes a fourth coil 921 and a fifth coil 922 connected in parallel to each other, and includes a third switch 931 for controlling the parallel connection between the fourth coil 921 and the fifth coil 922 according to a charging mode.

In operation 1520, the external device 700 according to an embodiment may identify whether the wireless charging coil 320 of the electronic device 101 supports the parallel switching function. The parallel switching function may mean, as described with reference to FIGS. 3 and 4, that the wireless charging coil 320 includes a first coil 321, a second coil 322, and a third coil 323 connected in parallel to one another, and includes a first switch 331 and a second switch 332 for controlling the parallel connection among the first coil 321, the second coil 322, and the third coil 323 according to a charging mode.

In operation 1530, the electronic device 101 according to an embodiment may transmit a first command corresponding to fast charging to the external device 700. For example, the first command may include data requesting transmission of first power corresponding to fast charging.

When the external device 700 supports the parallel switching function, the electronic device 101 according to an embodiment may transmit data (or an instruction) requesting control of the third switch 931 corresponding to fast charging. For example, the electronic device 101 may transmit the data so that the external device 700 opens the third switch 931 according to fast charging.

When the external device 700 supports the parallel switching function, the electronic device 101 according to an embodiment may request only transmission of designated first power without transmitting the data.

In operation 1540, the electronic device 101 according to an embodiment may close, based on transmission of the first command, the first switch 331 and the second switch 332. The wireless charging coil 320 may have designated second inductance and designated second resistance by the closing of the first switch 331 and the closing of the second switch 332. The second inductance may be less than the first inductance. The second resistance may be less than the first resistance.

In operation 1550, the external deice 700 according to an embodiment may open the third switch 931, based on reception of the first command. The transmission coil 920 of the external device 700 may increase the inductance and the resistance of the transmission coil 920 by the opening of the third switch 931. The external device 700 may increase the inductance and the resistance of the transmission coil 920 so as to reduce the voltage received from the wireless charging coil 320 of the electronic device 101.

In operation 1560, the electronic device 101 according to an embodiment may receive first power corresponding to fast charging from the external device 700. The electronic device 101 may charge the battery by using the received first power, or supply designated power to a component (e.g., system) included in the electronic device 101.

In an embodiment illustrated in FIG. 15, any one of operations 1540 and 1550 may be omitted. For example, operation 1540 may be omitted, or operation 1550 may be omitted.

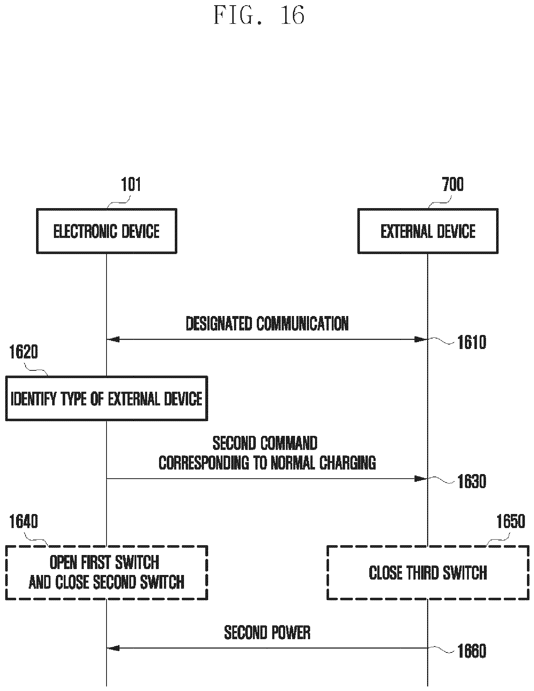

FIG. 16 is a flow chart illustrating a case where an electronic device 101 performs normal charging in an RX mode according to an embodiment.

At least some of the operations illustrated in FIG. 16 may be omitted. At least some operations mentioned with reference to other drawings of the disclosure may be additionally inserted before or after at least some operations illustrated in FIG. 16.

The operations illustrated in FIG. 16 may be performed by a processor (e.g., the processor of FIG. 1). For example, when being executed by the processor (e.g., the processor of FIG. 1), a memory (e.g., the memory 130 of FIG. 1) of the electronic device 101 may store instructions for causing the processor to perform at least some operations illustrated in FIG. 16.

In operation 1610, the electronic device 101 according to an embodiment may perform a ping stage according to the WPC standard. According to an embodiment, while performing the ping stage, the electronic device 101 may open a first switch 331 and close a second switch 332 so that a turn ratio between the wireless charging coil 320 of the electronic device 101 and the coil of the external device 700 is to be a ratio of 1:1. This may be for increasing a recognition rate so that the electronic device 101 accurately recognizes the external device 700, as described above.

Operation 1610 may be identical or similar to operation 710 of FIG. 7.

In operation 1620, the electronic device 101 according to an embodiment identify the type of the external device 700. For example, the electronic device 101 may perform an identification & configuration stage and determine whether the external device 700 is a device capable of fast charging or the external device 700 is a device capable of normal charging. For example, in operation 720, the electronic device 101 may identify that the external device 700 is a device capable of normal charging (e.g., a device incapable of fast charging).

In operation 1620, the electronic device 101 according to an embodiment may identify whether the transmission coil 920 of the external device 700 supports a parallel switching function. For example, the parallel switching function may mean, as described with reference to FIG. 9, that the transmission coil 920 of the wireless charger 900 includes a fourth coil 921 and a fifth coil 922 connected in parallel to each other, and includes a third switch 931 for controlling the parallel connection between the fourth coil 921 and the fifth coil 922 according to a charging mode.

In operation 1620, the external device 700 according to an embodiment may identify whether the wireless charging coil 320 of the electronic device 101 supports the parallel switching function. The parallel switching function may mean, as described with reference to FIGS. 3 and 4, that the wireless charging coil 320 includes a first coil 321, a second coil 322, and a third coil 323 connected in parallel to one another, and includes a first switch 331 and a second switch 332 for controlling the parallel connection among the first coil 321, the second coil 322, and the third coil 323 according to a charging mode.

Operation 1620 may be identical or similar to operation 1520 of FIG. 15.

In operation 1630, the electronic device 101 according to an embodiment may transmit a second command corresponding to normal charging to the external device 700. For example, the second command may include data requesting transmission of second power corresponding to normal charging.

When the external device 700 supports the parallel switching function, the electronic device 101 according to an embodiment may transmit data (or an instruction) requesting control of the third switch 931 corresponding to fast charging. For example, the electronic device 101 may transmit the data so that the external device 700 closes the third switch 931 according to fast charging.

When the external device 700 supports the parallel switching function, the electronic device 101 according to an embodiment may request only transmission of designated second power without transmitting the data.

In operation 1640, the electronic device 101 according to an embodiment may open the first switch 331 and close the second switch 332, based on transmission of the second command. The wireless charging coil 320 may have designated first inductance and designated first resistance by the opening of the first switch 331 and the closing of the second switch 332. The first inductance may be greater than the second inductance. The first resistance may be greater than the second resistance.

In operation 1650, the external deice 700 according to an embodiment may close the third switch 931, based on reception of the second command. The transmission coil 920 of the external device 700 may reduce the inductance and the resistance of the transmission coil 920 by the closing of the third switch 931.

In operation 1660, the electronic device 101 according to an embodiment may receive second power corresponding to normal charging from the external device 700. The electronic device 101 may charge the battery by using the received second power, or supply designated power to a component (e.g., system) included in the electronic device 101.

In an embodiment illustrated in FIG. 16, any one of operations 1640 and 1650 may be omitted. For example, operation 1640 may be omitted, or operation 1650 may be omitted.

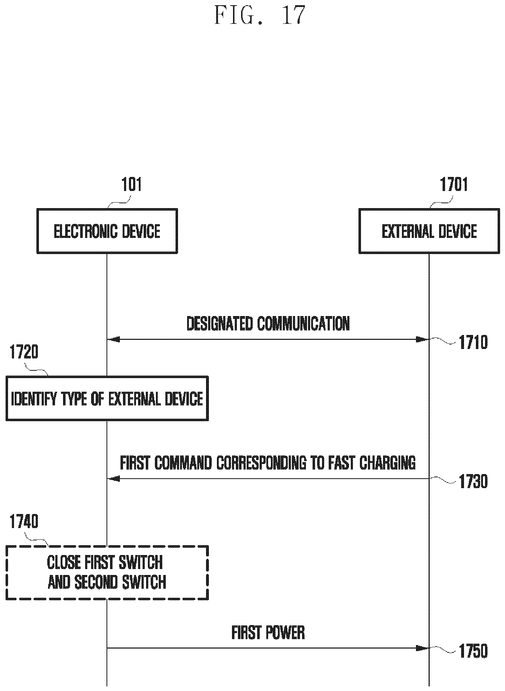

FIG. 17 is a flow chart illustrating a case where an electronic device 101 performs fast charging in a TX mode according to an embodiment.

At least some of the operations illustrated in FIG. 17 may be omitted. At least some operations mentioned with reference to other drawings of the disclosure may be additionally inserted before or after at least some operations illustrated in FIG. 17.

The operations illustrated in FIG. 17 may be performed by a processor (e.g., the processor of FIG. 1). For example, a memory (e.g., the memory 130 of FIG. 1) of the electronic device 101 may store instructions for causing the processor to perform at least some operations illustrated in FIG. 17.

In operation 1710, the electronic device 101 according to an embodiment may perform a ping stage according to the WPC standard. According to an embodiment, while performing the ping stage, the electronic device 101 may open a first switch 331 and close a second switch 332 so that a turn ratio between the wireless charging coil 320 of the electronic device 101 and the coil of the external device 1701 is to be a ratio of 1:1. This may be for increasing a recognition rate so that the electronic device 101 accurately recognizes the external device 1701, as described above.

In operation 1720, the electronic device 101 according to an embodiment identify the type of the external device 1701. For example, the electronic device 101 may perform an identification & configuration stage and determine whether the external device 1701 is a device capable of fast charging or the external device 1701 is a device capable of normal charging. For example, in operation 1720, the electronic device 101 may identify that the external device 1701 is a device capable of fast charging.

In operation 1730, the electronic device 101 according to an embodiment may receive a first command corresponding to fast charging from the external device 1701. For example, the first command may include data requesting transmission of first power corresponding to fast charging.

In operation 1740, the electronic device 101 according to an embodiment may open, based on reception of the first command, the first switch 331 and the second switch 332. The wireless charging coil 320 may have designated third inductance and designated third resistance by the opening of the first switch 331 and the opening of the second switch 332.

When performing fast charging in the TX mode, the electronic device 101 may increase the inductance and resistance of the wireless charging coil 320 by the control of the first switch 331 and the second switch 332. When the wireless charging coil 320 is configured to have the third inductance and the third resistance, a turn ratio between the wireless charging coil 320 of the electronic device 101 and a reception coil of the external device 1701 may be a ratio of about 2:1, and a ratio between the voltage of the wireless charging coil 320 and the voltage of the reception coil may have a ratio of about 2:1.

In operation 1750, the electronic device 101 according to an embodiment may transmit the first power corresponding to fast charging to the external device 1701 through the wireless charging coil 320.

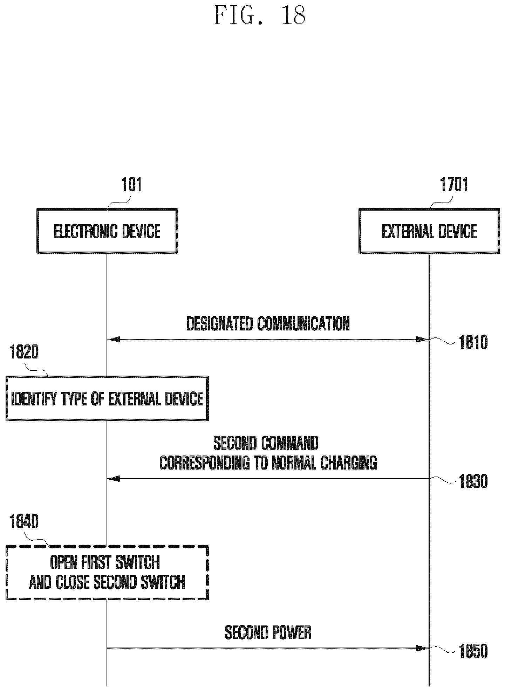

FIG. 18 is a flow chart illustrating a case where an electronic device 101 performs normal charging in a TX mode according to an embodiment.

At least some of the operations illustrated in FIG. 18 may be omitted. At least some operations mentioned with reference to other drawings of the disclosure may be additionally inserted before or after at least some operations illustrated in FIG. 18.

The operations illustrated in FIG. 18 may be performed by a processor (e.g., the processor of FIG. 1). For example, when being executed by the processor (e.g., the processor of FIG. 1), a memory (e.g., the memory 130 of FIG. 1) of the electronic device 101 may store instructions for causing the processor to perform at least some operations illustrated in FIG. 18.

In operation 1810, the electronic device 101 according to an embodiment may perform a ping stage according to the WPC standard. According to an embodiment, while performing the ping stage, the electronic device 101 may open a first switch 331 and close a second switch 332 so that a turn ratio between the wireless charging coil 320 of the electronic device 101 and the coil of the external device 1701 is to be a ratio of 1:1. This may be for increasing a recognition rate so that the electronic device 101 accurately recognizes the external device 1701, as described above.

In operation 1820, the electronic device 101 according to an embodiment identify the type of the external device 1701. For example, the electronic device 101 may perform an identification & configuration stage and determine whether the external device 1701 is a device capable of fast charging or the external device 1701 is a device capable of normal charging. For example, in operation 1820, the electronic device 101 may identify that the external device 1701 is a device capable of normal charging (e.g., a device incapable of fast charging). The device incapable of fast charging may be, for example, a smartphone, a watch, or a true wireless stereo earphone.

In operation 1830, the electronic device 101 according to an embodiment may receive a second command corresponding to normal charging from the external device 1701. For example, the second command may include data requesting transmission of second power corresponding to normal charging.

In operation 1840, the electronic device 101 according to an embodiment may open the first switch 331 and close the second switch 332, based on the reception of the second command. The wireless charging coil 320 may have designated first inductance and designated first resistance by the opening of the first switch 331 and the closing of the second switch 332. When the wireless charging coil 320 is configured to have the first inductance and the first resistance, a turn ratio between the reception coil of the external device 1701 and the wireless charging coil 320 of the electronic device 101 may have a ratio of about 1:1, and a ratio between the voltage of the reception coil and the voltage of the wireless charging coil 320 may have a ratio of about 1:1.

In operation 1850, the electronic device 101 according to an embodiment may transmit the second power corresponding to normal charging to the external device 1701 through the wireless charging coil 320.

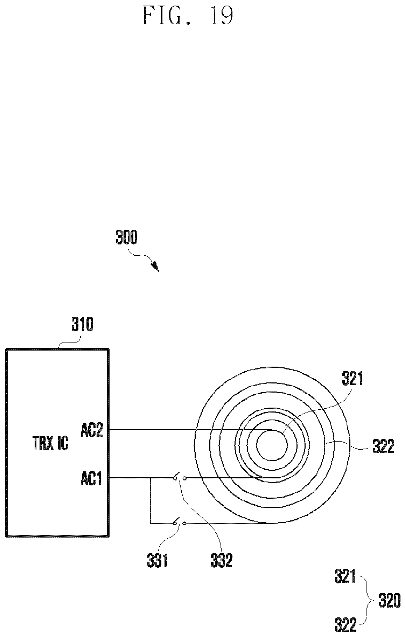

FIG. 19 is a concept diagram illustrating a wireless charging device 300 of an electronic device 101 according to an embodiment. The wireless charging device 300 illustrated in FIG. 19 may be at least partially similar to the wireless charging device 300 illustrated in FIG. 3.

Referring to FIG. 19, the wireless charging device 300 may include a transmission/reception integrated circuit (TRX IC) 310 (e.g., a wireless charging IC) and a wireless charging coil 320 electrically connected to the TRX IC 310. According to an embodiment, the wireless charging coil 320 may include a first coil 321 and a second coil 322 connected in parallel to the first coil 321.

According to an embodiment, the wireless charging device 300 may include a first switch 331 for switching parallel connection between the first coil 321 and the second coil 322, and a second switch 332 for switching the connection between the first coil 321 and the TRX IC 310. At least one of the first switch 331 and the second switch 332 may be configured by default to be closed. For example, the second switch 332 may be configured to be closed.

According to an embodiment, the second coil 322 may be connected in parallel to the first coil 321, and the parallel connection between the first coil 321 and the second coil 322 may be switched by the first switch 331. The first switch 331 may be disposed between one end of the first coil 321 and the second coil 322. The second coil 322 may be disposed on the outer side of the wireless charging coil 320. For example, the second coil 322 may be formed on the outer side of the first coil 321. The second coil 322 may be connected parallel to the first coil 321 by the closing of the first coil 331, and may thus adjust the total resistance and inductance of the wireless charging coil 320.

According to an embodiment, the second coil 322 may be disposed to be adjacent to the inner center part of the wireless charging coil 320. For example, the second coil 322 may be formed inside the first coil 321. The second coil 322 may be connected parallel to the first coil 321 by the closing of the first coil 331, and may thus adjust the total resistance and inductance of the wireless charging coil 320.

According to an embodiment, a control operation of the first switch 331 and the second switch 332 when the wireless charging device 300 of the electronic device 101 is in the RX mode may be as shown in Table 4 below.

**[Table 4]**

| | Charging mode | First switch 331 | Second switch 332 |
|---|---|---|---|
| RX mode | Normal charging (e.g., second charging mode) | Opened | Closed |
| | Fast charging (e.g., first charging mode) | Closed | Closed |

Referring to Table 4, when the wireless charging device 300 performs normal charging in the RX mode, the electronic device 101 may open the first witch 331 and close the second switch 332. When the wireless charging device 300 performs fast charging in the RX mode, the electronic device 101 may close the first switch 331 and close the second switch 332. When performing normal charging, the electronic device 101 may configure a ratio between the voltage applied to the transmission coil 920 of the external device 700 and a reception voltage of the wireless charging coil 320 of the electronic device 101 to be a ratio of 1:1 by the opening of the first witch 331 and the closing of the second switch 332. When performing fast charging, the electronic device 101 may configure a ratio between the voltage applied to the transmission coil 920 of the external device 700 and a reception voltage of the wireless charging coil 320 of the electronic device 101 to be a ratio of about 2:1 by the closing of the first witch 331 and the closing of the second switch 332.

An electronic device (e.g., the electronic device 101 of FIG. 1) according to an embodiment may include a battery (e.g., the battery 189 of FIG. 1), a wireless charging coil (e.g., the wireless charging coil 320 of FIG. 3) including a first coil (e.g., the first coil 321 of FIG. 3) and a second coil (e.g., the second coil 322 of FIG. 3) connected in parallel to the first coil 321, a wireless charging IC (e.g., the TRX IC 310 of FIG. 3) electrically connected to the wireless charging coil 320, a first switch configured to switch the parallel connection between the second coil 322 and the first coil 321, and a processor 120, wherein the processor 120 is configured to activate, based on the electronic device 101 being placed to be aligned with at least a part of an external device, a wireless charging function of charging the battery 189 by using wireless power input through the wireless charging coil 320 from the external device, identify, based on performing designated communication with the external device, a type of the external device, in case that the external device is a device supporting fast charging, transmit a first command for requesting transmission of designated first power corresponding to fast charging to the external device, close the first switch, in case that the external device is a device not supporting fast charging, transmit a second command for requesting transmission of designated second power corresponding to normal charging to the external device, and open the first switch.

According to an embodiment, the processor 120 may be configured to open the first switch while performing the designated communication.

According to an embodiment, the processor 120 may be configured to configure a ratio between a voltage applied to a transmission coil of the external device and a reception voltage of the wireless charging coil 320 to be 2:1 by the closing of the first switch.

According to an embodiment, the wireless charging coil 320 may include a structure in which a first layer and a second layer formed in a first direction from the first layer are laminated, the first layer may include the first coil 321, a third coil 323 disposed on an outer side of the first coil 321, and the second coil 322 disposed on an outer side of the third coil 323, the second layer may include the first coil 321, the second coil 322, and the third coil 323, and the first coil 321, the second coil 322, and the third coil 323 formed on the second layer may be formed to overlap the first coil 321, the second coil 322, and the third coil 323 formed on the first layer, respectively.

According to an embodiment, the wireless charging coil 320 may include a structure in which a first layer and a second layer formed in a first direction from the first layer are laminated, the first layer may include the first coil 321 and a third oil 323 disposed on an outer side of the first coil 321, the second layer may include the first coil 321 and the second coil 322 disposed on an outer side of the first coil 321, and the second coil 322 of the second layer may be configured to overlap the third coil 323 of the first layer.

According to an embodiment, the wireless charging coil 320 may include a structure in which a first layer, a second layer, and a third layer are subsequently laminated, each of the first layer and the second layer may include the first coil 321 and a third coil 323 disposed on an outer side of the first coil 321, and the third layer may include the second coil 322.

According to an embodiment, the wireless charging coil 320 may include a structure in which a first layer, a second layer, and third layer are subsequently laminated, the first layer may include the first coil 321, the second layer may include a third coil 323 overlapping the first coil 321 of the first layer, and the third layer may include the second coil 322 overlapping the first coil 321 of the first layer and the third coil 323 of the second layer.

According to an embodiment, the processor 120 may be configured to activate a wireless power sharing function of transmitting wireless power to an external device by using the wireless charging coil, in case that the wireless power sharing function is activated, identify a type of the external device by performing of designated communication with the external device, receive a first command for requesting transmission of designated first power corresponding to fast charging from the external device, in response to the reception of the first command, open the first switch, and transmit the first power to the external device by using the wireless charging coil 320.

According to an embodiment, the wireless charging coil 320 may further include a third coil 323 connected in parallel to the first coil 321 and the second coil 322, and may further include a second switch configured to switch the parallel connection between the third coil 323 and the first coil 321 and second coil 322.

According to an embodiment, the processor may be configured to after the wireless power sharing function is activated, receive a second command for requesting transmission of designated second power corresponding to normal charging from the external device, in response to the reception of the second command, close the second switch in addition to the opening of the first switch, and transmit the second power to the external device by using the wireless charging coil 320.

According to an embodiment, the processor 120 may be configured to configure the wireless charging coil 320 to have first inductance and first resistance by the opening of the first switch and the closing of the second switch, and configure the wireless charging coil 320 to have second inductance smaller than the first inductance and second resistance smaller than the first resistance.

According to an embodiment, the processor 120 may be configured to configure a ratio between a voltage applied to a transmission coil of the external device and a reception voltage of the wireless charging coil 320 to be 2:1 by the closing of each of the first switch and the second switch.

A method of an electronic device 101 according to an embodiment, the electronic device 101 including a wireless charging coil 320 including a first coil 321 and a second coil 322 connected in parallel to the first coil 321, a wireless charging integrated circuit (IC) 310 electrically connected to the wireless charging coil 320, and a first switch configured to switch the parallel connection between the second coil 322 and the first coil 321, may include activating, based on the electronic device 101 being placed to be aligned with at least a part of an external device, a wireless charging function of charging a battery 189 by using wireless power input through the wireless charging coil 320 from the external device, identifying, based on performing designated communication with the external device, a type of the external device, in case that the external device is a device supporting fast charging, transmitting a first command for requesting transmission of designated first power corresponding to fast charging to the external device, closing the first switch, in case that the external device is a device not supporting fast charging, transmitting a second command for requesting transmission of designated second power corresponding to normal charging to the external device, and opening the first switch.

According to an embodiment, the method may include opening the first switch while the designated communication is performed.

According to an embodiment, the method may include activating a wireless power sharing function of transmitting wireless power to an external device by using the wireless charging coil 320, in case that the wireless power sharing function is activated, identifying a type of the external device by performing of designated communication with the external device, receiving a first command for requesting transmission of designated first power corresponding to fast charging from the external device, in response to the reception of the first command, opening the first switch, and transmitting the first power to the external device by using the wireless charging coil 320.

According to an embodiment, the electronic device 101 may include a third coil 323 connected in parallel to the first coil 321 and the second coil 322, and a second switch configured to switch the parallel connection between the third coil 323 and the first coil 321 and the second coil 322, and the method may include after the wireless power sharing function is activated, receiving a second command for requesting transmission of designated second power corresponding to normal charging from the external device, in response to the reception of the second command, closing the second switch in addition to the opening of the first switch, and transmitting the second power to the external device by using the wireless charging coil 320.

An electronic device (e.g., the electronic device 900 of FIG. 9) configured to transmit wireless transmission to an external device according to an embodiment may include a transmission coil including a first coil (e.g., the fourth coil 921 of FIG. 9) and a second coil (e.g., the fifth coil 922 of FIG. 9) connected in parallel to the first coil 921, a transmission integrated chip (TX IC) electrically connected to the transmission coil, a first switch configured to switch the parallel connection between the second coil 922 and the first coil 921, and a controller, wherein the controller is configured to activate a wireless power sharing function of transmitting wireless power to the external device by using the transmission coil, in case that the wireless power sharing function is activated, identify a type of the external device by performing designated communication with the external device, receive a first command for requesting transmission of designated first power corresponding to fast charging from the external device, in response to the reception of the first command, open the first switch, and transmit the first power to the external device by using the transmission coil.

According to an embodiment, the controller may be configured to configure a ratio between a voltage of the transmission coil and a voltage of a reception coil of the external device to be 2:1 by the opening of the first switch.

According to an embodiment, the controller may be configured to receive a second command for requesting transmission of designated second power corresponding to normal charging from the external device, in response to the reception of the second command, close the first switch, and transmit the second power to the external device by using the transmission coil.

According to an embodiment, the controller may be configured to configure a ratio between a voltage of the transmission coil and a voltage of a reception coil of the external device to be 1:1 by the closing of the first switch.

## Claims

1. An electronic device comprising:
a battery;
a wireless charging coil comprising a first coil and a second coil connected in parallel to the first coil;
a wireless charging integrated circuit (IC) electrically connected to the wireless charging coil;
a first switch configured to switch the parallel connection between the second coil and the first coil; and
a processor,
wherein the processor is configured to:
activate, based on the electronic device being placed to be aligned with at least a part of an external device, a wireless charging function of charging the battery by using wireless power input through the wireless charging coil from the external device;
identify, based on performing designated communication with the external device, a type of the external device;
in case that the external device is a device supporting fast charging, transmit, to the external device, a first command for requesting transmission of designated first power corresponding to fast charging;
close the first switch;
in case that the external device is a device not supporting fast charging, transmit, to the external device, a second command for requesting transmission of designated second power corresponding to normal charging; and
open the first switch.

2. The electronic device of claim 1, wherein the processor is configured to open the first switch while performing the designated communication.

3. The electronic device of claim 1, wherein the processor is configured to configure a ratio between a voltage applied to a transmission coil of the external device and a reception voltage of the wireless charging coil to be 2:1 by the closing of the first switch.

4. The electronic device of claim 1, wherein the wireless charging coil comprises a structure in which a first layer and a second layer formed in a first direction from the first layer are laminated,
wherein the first layer comprises the first coil, a third coil disposed on an outer side of the first coil, and the second coil disposed on an outer side of the third coil, and
wherein the second layer comprises the first coil, the second coil, and the third coil, and the first coil, the second coil, and the third coil formed on the second layer are formed to overlap the first coil, the second coil, and the third coil formed on the first layer, respectively.

5. The electronic device of claim 1, wherein the wireless charging coil comprises a structure in which a first layer and a second layer formed in a first direction from the first layer are laminated,
wherein the first layer comprises the first coil and a third oil disposed on an outer side of the first coil, and
wherein the second layer comprises the first coil and the second coil disposed on an outer side of the first coil, and the second coil of the second layer is formed to overlap the third coil of the first layer.

6. The electronic device of claim 1, wherein the wireless charging coil comprises a structure in which a first layer, a second layer, and a third layer are subsequently laminated,
wherein each of the first layer and the second layer comprises the first coil and a third coil disposed on an outer side of the first coil, and
wherein the third layer comprises the second coil.

7. The electronic device of claim 1, wherein the wireless charging coil comprises a structure in which a first layer, a second layer, and third layer are subsequently laminated,
wherein the first layer comprises the first coil,
wherein the second layer comprises a third coil overlapping the first coil of the first layer, and
wherein the third layer comprises the second coil overlapping the first coil of the first layer and the third coil of the second layer.

8. The electronic device of claim 1, wherein the processor is configured to:
activate a wireless power sharing function of transmitting wireless power to an external device by using the wireless charging coil;
in case that the wireless power sharing function is activated, identify a type of the external device by performing of designated communication with the external device;
receive, from the external device, a first command for requesting transmission of designated first power corresponding to fast charging;
in response to the reception of the first command, open the first switch; and
transmit the first power to the external device by using the wireless charging coil.

9. The electronic device of claim 8, wherein the wireless charging coil further comprises:
a third coil connected in parallel to the first coil and the second coil; and
a second switch configured to switch the parallel connection between the third coil and the first coil and second coil.

10. The electronic device of claim 9, wherein the processor is configured to:
after the wireless power sharing function is activated, receive, from the external device, a second command for requesting transmission of designated second power corresponding to normal charging;
in response to the reception of the second command, close the second switch in addition to the opening of the first switch; and
transmit the second power to the external device by using the wireless charging coil.

11. The electronic device of claim 9, wherein the processor is configured to:
configure the wireless charging coil to have first inductance and first resistance by the opening of the first switch and the closing of the second switch; and
configure the wireless charging coil to have second inductance smaller than the first inductance and second resistance smaller than the first resistance by the closing of each of the first switch and the second switch.

12. The electronic device of claim 9, wherein the processor is configured to configure a ratio between a voltage applied to a transmission coil of the external device and a reception voltage of the wireless charging coil to be 2:1 by the closing of each of the first switch and the second switch.

13. A method for wirelessly charging an electronic device,
wherein the electronic device comprises a wireless charging coil comprising a first coil and a second coil connected in parallel to the first coil, a wireless charging integrated circuit (IC) electrically connected to the wireless charging coil, and a first switch configured to switch the parallel connection between the second coil and the first coil, and
wherein the method comprises:
activating, based on the electronic device being placed to be aligned with at least a part of an external device, a wireless charging function of charging a battery by using wireless power input through the wireless charging coil from the external device;
identifying, based on performing designated communication with the external device, a type of the external device;
in case that the external device is a device supporting fast charging, transmitting, to the external device, a first command for requesting transmission of designated first power corresponding to fast charging;
closing the first switch;
in case that the external device is a device not supporting fast charging, transmitting, to the external device, a second command for requesting transmission of designated second power corresponding to normal charging; and
opening the first switch.

14. The method of claim 13, comprising opening the first switch while the designated communication is performed.

15. The method of claim 13, comprising:
activating a wireless power sharing function of transmitting wireless power to an external device by using the wireless charging coil;
in case that the wireless power sharing function is activated, identifying a type of the external device by performing of designated communication with the external device;
receiving a first command for requesting transmission of designated first power corresponding to fast charging from the external device;
in response to the reception of the first command, opening the first switch; and
transmitting the first power to the external device by using the wireless charging coil.
